# FASCICULE DE BREVET EUROPEEN

(11) **EP 1 848 725 B1**
(45) Date de publication et mention de la délivrance du brevet: **27.11.2013**
(21) Numéro de dépôt: 06709313.8
(22) Date de dépôt: 14.02.2006
(51) Int. Cl.: C07F 5/02

(54) **DIPYRROMETHENES-BORE BOROCARBONES INSATURES**
UNGESÄTTIGTE DIPYRROMETHEN-BOR-BORKOHLENSTOFFVERBINDUNGEN
UNSATURATED DIPYRROMETHENE-BORON BOROCARBONS

(30) Priorité: 15.02.2005 FR 0501518
(43) Date de publication de la demande: 31.10.2007
(73) Titulaire: Centre National de la Recherche Scientifique, 75016 Paris (FR); Université Louis Pasteur de Strasbourg, F-67000 Strasbourg (FR)
(72) Inventeur: ULRICH, Gilles, F-67200 Strasbourg (FR); ZIESSEL, Raymond, F-67400 Souffelweysheim (FR); GOZE, Christine, F-68800 Rammersmatt (FR)
(74) Mandataire: Colombet, Alain André
(86) Numéro de dépôt international: PCT/FR2006/000333
(87) Numéro de publication internationale: WO 2006/087459

(56) Documents cités:
- EP-A- 1 253 151
- GILLES, U. ET AL.: "Pyrromethane Dialkynyl Borane Complexes for "Cascatelle" Energy Transfer and Protein Labeling" ANGEW. CHEM. INT. ED., vol. 44, 25 mai 2005 (2005-05-25), XP002349611

## Description

La présente invention concerne des dipyrrométhènes-bore borocarbonés insaturés, et leur utilisation pour l'analyse par fluorescence ou pour l'électroluminescence.

Les marqueurs fluorescents sont actuellement très utilisés pour les dosages qualitatifs et quantitatifs dans les domaines de l'immunologie, de la biologie moléculaire, du diagnostic médical ou pour les puces ADN.

L'une des propriétés requises pour qu'un composé chimique puisse être utilisé comme marqueur fluorescent est un déplacement de Stokes élevé, le déplacement de Stokes étant la différence d'énergie entre l'excitation et l'émission du composé. L'utilisation de marqueurs à faible déplacement de Stokes nécessite l'emploi de filtres spécifiques pour éliminer la lumière d'excitation résiduelle, ce qui réduit la sensibilité de la mesure.

Parmi les nombreux composés de l'art antérieur utilisables comme marqueurs fluorescents, on peut citer notamment les difluorures de dipyrrométhènebore (désignés ci-après par DFMB). US-4,774,339 décrit des composés DFMB qui ont des propriétés de colorant et qui contiennent des groupes fonctionnels capables de former un produit fluorescent stable avec les groupes fonctionnels de molécules biologiques ou de polymères, lesdites molécules étant détectées par leurs propriétés d'absorption et de fluorescence. US-5,187,288 des composés DFMB qui ont une absorption maximale à des longueurs d'onde supérieures à environ 525 nm, qui sont neutres électriquement, photostables et en général fortement fluorescents. US-5,248,782 décrit des composés DFMB qui ont des propriétés de colorant et qui comprennent des substituants hétéroaryle. US-5,274,113 décrit des composés DFMB qui sont des colorants fluorescents qui ont une absorption maximale à des longueurs d'onde supérieures à environ 525 nm, et qui présentent une réactivité chimique vis à vis des acides nucléiques, des protéines, des hydrates de carbone et d'autres composés biologiques. US-5,338,854 décrit des composés qui sont des analogues fluorescents d'acides gras dérivés de difluorure de dipyrrométhènebore et qui ont une absorption maximale à des longueurs d'onde supérieures à environ 480 nm. US-5,451,663 décrit des composés qui sont des colorants fluorescents ayant une absorption maximale à des longueurs d'onde supérieures à environ 525 nm, et qui présentent une réactivité chimique vis à vis des acides nucléiques, des protéines, des hydrates de carbone et d'autres composés biologiques. US-4,916,711 décrit un procédé de production de lumière laser à l'aide de composés DFMB. US-5,189,029 décrit une méthode de traitement de tumeurs cancéreuses à l'aide de trois composés particuliers DFMB. US-5,446,157 mentionne une famille de composés DFMB. US-5,852,191 décrit des dihalogénures de dipyrrométhènebore présentés comme des colorants hautement fluorescents et absorbants de la lumière qui émettent dans la région du bleu, et qui peuvent être utilisés dans différentes applications biologiques et non biologiques. US-5,446,157 mentionne une autre famille de composés DFMB.

Parmi les composés évoqués ci-dessus, la plupart ont des propriétés de fluorescence. Cependant, ils présentent tous un déplacement de Stokes relativement faible (Δν ≈ 500 à 600 cm⁻¹), ce qui fait que, lorsqu'ils sont utilisés comme marqueurs, leur sensibilité n'est pas optimale du fait de l'utilisation d'un filtre.

Les présents inventeurs ont trouvé que le remplacement d'au moins l'un des atomes de fluor présents sur le bore des composés de type difluorure de dipyrrométhènebore par un substituant approprié, permet d'obtenir des composés présentant un déplacement de Stokes augmenté de manière substantielle par rapport aux composés équivalents bifluorés, lesdits composés ayant par conséquent une sensibilité nettement améliorée lorsqu'ils sont utilisés comme marqueurs pour l'analyse par fluorescence ou pour l'électroluminescence.

Le but de la présente invention est de fournir des composés qui ont un déplacement de Stokes amélioré, un haut rendement quantique de fluorescence et de très grands coefficients d'extinction molaire, et dans lesquels la longueur d'onde d'excitation et la longueur d'onde d'émission peuvent être contrôlées. Lesdits composés sont particulièrement adaptés à une utilisation comme marqueur fluorescent ou pour l'électroluminescence.

Les composés selon la présente invention **répondent** à la formule générale (I) 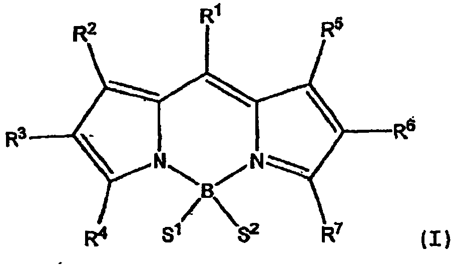 dans laquelle :
- Chacun des substituants R¹, R², R³, R⁴, R⁵, R⁶ et R⁷ est choisi indépendamment des autres dans le groupe constitué par H, les groupements -L-H, les groupements -G et les groupements -L-G,
   ou bien les deux substituants R³ et R⁴ forment ensemble un groupement divalent Z³⁴ et/ou les deux substituants R⁶ et R⁷ forment ensemble un groupement divalent Z⁶⁷, lesdits groupements divalents étant tels qu'ils forment avec les atomes de carbone auxquels ils sont attachés une structure choisie dans le groupe constitué par un cycle ou deux cycles condensés, chaque cycle ayant 5 ou 6 atomes et comprenant des atomes de carbone et au plus deux hétéroatomes choisis parmi N, O et S *;*
- L est un groupement de liaison constitué par une liaison simple, ou par un ou plusieurs segments choisi parmi les alkylènes et les alkénylènes linéaires ou ramifiés comprenant éventuellement dans leur chaîne un ou plusieurs atomes d'oxygène formant des groupements éther, les alkynylènes, et les arylènes comprenant un seul noyau ou comprenant plusieurs noyaux condensés ou non condensés ;
- G est un groupement fonctionnel choisi parmi :
   - les groupes polaires choisis parmi les groupes amide, sulfonate, sulfate, phosphate, ammonium quaternaire, hydroxyle, phosphonate, et les segments polyéthylèneoxyde,
   - les groupes donneurs d'électrons ou électroattracteurs choisis parmi les groupes cyano, nitro, fluoroalkyle, perfluoroalkyle, amide, nitrophényle, triazino substitué, sulfonamide, alkényle et alkynyle, et le groupe de liaison L étant alors choisi parmi les segments alkénylène ou alkynylène ayant de 2 à 4 atomes de carbone,
   - les groupements fonctionnels réactifs qui permettent le greffage dudit composé sur une molécule biologique, et les groupes capables de réagir avec un composé organique en formant une liaison forte ou faible avec ledit composé et
      - choisis parmi H, les groupes trialkyl- silyle et une fonction réticulable lorsque le composé est un polymère,
      - choisis parmi l'ester succinimidyle, l'ester sulfosuccinimidyle, l'isothiocyanate, l'isocyanate, l'iodoacétamide, la maléimide, les halosulfonyles, les phosphoramidites, les alkylimidates, les arylimidates, les halogénoacides, les hydrazines substituées, les hydroxylamines substituées, les carbodiimides lorsque le composé est une molécule biologique, ou
      - choisis parmi les groupes amino, ureido, hydroxyle, sulfhydryle, carboxyle, carbonyle et éther couronne lorsque le composé est un composé organique,
   - les groupes capables de réagir avec un composé inorganique en formant une liaison forte ou faible avec ledit composé et choisis parmi les groupes carboxylate lorsque le composé inorganique est un oxyde de titane, une zéolithe ou l'alumine, un thiol ou un thioéther lorsque le composé inorganique est un métal ou un siloxane lorsque le composé inorganique est la silice ou une surface oxydée de silicium
- Les substituants S¹ et S² représentent indépendamment l'un de l'autre un groupement choisi dans le groupe défini pour les substituants R¹ à R⁷ ; ou un groupement répondant à la formule -C≡C-L'-A dans laquelle L' est une liaison simple ou un groupement choisi dans le groupe défini pour L, et A est
   - un groupe chromophore choisi parmi :
      - les groupements aryle ayant un noyau aromatique portant éventuellement des substituants ;
      - les groupements aryle ayant au moins deux noyaux condensés, et portant éventuellement au moins un substituant ;
      - les groupements ayant des propriétés de colorant,
   - un groupe fonctionnel capable de se fixer sur une molécule biologique choisi dans le groupe constitué par l'ester succinimidyle, l'ester sulfosuccinimidyle, l'isothiocyanate, l'isocyanate, l'iodoacétamide, la maléimide, les halosulfonyles, les phosphoramidites, les alkylimidates, les arylimidates, les halogénoacides, les hydrazines substituées, les hydroxylamines substituées et les carbodiimides,
   - un groupe fonctionnel capable de se fixer sur un composé inorganique choisi parmi une fonction carboxylate, thiol, thioéther et siloxane,
   - un groupe fonctionnel capable de se fixer sur un composé polymère, ledit groupe fonctionnel étant choisi parmi H, les trialkylsilyles, une fonction réticulable, ou
   - un groupe fonctionnel capable de se fixer sur un composé organique ou un sel organique, ledit groupe fonctionnel étant choisi parmi amino, ureido, hydroxyle, sulfhydryle, carboxyle, carbonyle ou éther couronne;
caractérisé en ce qu'au moins l'un des substituants S¹ et S² est un groupe -C≡C-L'-A dans lequel A est un groupe chromophore.

Les propriétés de fluorescence sont conférées aux molécules de l'invention essentiellement par le cycle central à 6 atomes comprenant la séquence -N-B-N-.

Le choix des substituants R¹ à R⁷ (désignés collectivement le cas échéant ci-après par Rⁱ) permet de modifier les propriétés du composé, telles que par exemple la longueur d'onde d'émission de fluorescence, le rendement quantique de fluorescence, la solubilité et le moment dipolaire, par le choix du groupe de liaison L et/ou du groupe terminal H ou G.

Le groupe de liaison L est constitué de préférence par une liaison simple, ou par un segment alkylène ayant de 1 à 10 atomes de carbone, plus particulièrement de 1 à 6 atomes de carbone, et/ou par un segment phénylène, et/ou par un segment alkynylène ayant de 2 à 4 atomes de carbone et/ou par un segment alkénylène ayant de 2 à 4 atomes de carbone et/ou par un segment polyéther [par exemple un segment poly(oxyde d'éthylène)] ayant de 1 à 12 atomes d'oxygène.

Le groupe fonctionnel terminal G est destiné à conférer au composé les propriétés requises. Il peut être choisi parmi :
- Les groupes polaires qui augmentent la solubilité du composé dans l'eau (par exemple les groupes amide, sulfonate, sulfate, phosphate, ammonium quaternaire, hydroxyle, phosphonate, polyoxyéthylène) ;
- Les groupes donneurs d'électrons et les groupes électroattracteurs qui déplacent les longueurs d'onde d'absorption et d'émission de la molécule fluorescente (par exemple les groupes cyano, nitro, fluoroalkyle, perfluoroalkyle, amide, nitrophényle, triazino substitué, sulfonamide, alkényle et alkynyle), étant entendu que dans ce cas, le groupe de liaison L est choisi parmi les segments alkénylène ou alkynylène ayant de 2 à 4 atomes de carbone.
- Les groupements fonctionnels réactifs qui permettent le greffage du composé de l'invention sur une molécule biologique, en formant un composé marqué qui permettra de détecter et quantifier un composé donné présent dans un milieu (par exemple, le composé obtenu par greffage d'un composé selon l'invention sur un anticorps permettra de détecter l'antigène correspondant) ;
- Les groupes fonctionnels capables de réagir avec un composé organique ou un composé inorganique à détecter dans un milieu, en formant une liaison forte (covalente ou ionique) ou faible (liaison hydrogène) avec ledit composé à détecter.

Les substituants S¹ et S² sont désignés ci-après collectivement par Sⁱ, le cas échéant.

Un substituant Sⁱ dans lequel le groupe terminal A est un groupe chromophore a pour effet de permettre l'excitation de la molécule dans les longueurs d'onde proches du substituant chromophore A, qui est choisi de préférence parmi les substituants chromophores ayant une longueur d'onde proche de l'ultraviolet, ce qui augmente fortement le déplacement de Stokes. Cet effet sera accentué si les deux substituants Sⁱ portent un groupe terminal chromophore.

Dans un mode de réalisation, l'un au moins des substituants Sⁱ est un groupe -C≡C-L'-A dans lequel L' est une liaison simple ou un segment alkylène ayant de 1 à 10 atomes de carbone ou un segment polyéther ayant de 1 à 12 atomes de carbone, et A représente un groupement chromophore choisi parmi :
- les groupements aryle ayant un noyau aromatique portant éventuellement des substituants (par exemple le p-toluyle, le styrényle, le pyridinyle, les oligopyridinyles (en particulier le bipyridinyle et le terpyridinyle), le thiényle, ou le pyrrolyle),
- les groupements aryle ayant au moins deux noyaux condensés (tels que par exemple le naphtyle, le pyrényle, le l'anthracényle; le phénanthrényle, le quinolyle, le phénanthronyle, le pérylényle, le fluorényle, le carbazolyle et l'acridinyle), lesdits groupements portant éventuellement au moins un substituant (choisi par exemple dans le groupe constitué par les groupements sulfonato, amino, nitro, hydroxy, éther et halogéno) ;
- les groupements ayant des propriétés de colorant, tel que par exemple les groupements coumarinyle, hydroxycoumarinyle, alkoxycoumarinyle, trisulfonatopyrényle, cyanines, styrylpyridinium, naphtalimidinyle ou phénylphénanthridium.

Lorsqu'un composé selon l'invention est destiné à être fixé sur un autre composé, l'un au moins des substituants Sⁱ est un groupe -C≡C-L'-A ou l'un au moins des substituants Rⁱ est un groupe -L-G dans lesquels A ou G est un groupement qui permet de fixer le composé de l'invention sur ledit autre composé. Dans un mode de réalisation préféré, L' ou L est une liaison simple ou un alkylène ayant de 1 à 10 atomes de carbone ou un segment polyéther ayant de 1 à 12 atomes de carbone.

Si un seul groupement Sⁱ est du type -C≡C-L'-A, le deuxième groupement Sⁱ est choisi avantageusement parmi les groupements aryle mononucléaires portant éventuellement un substituant, et les groupements aryle comprenant au moins deux noyaux condensés.

Lorsque le composé de l'invention est destiné à être fixé sur un composé polymère, le groupement A ou le groupement G est choisi de préférence parmi H, les trialkylsilyles, ou une fonction réticulable telle que par exemple un groupe méthacrylate, vinyle, styryle, anilino, pyrrolyle, thiophényle, furyle, isocyanato, ou époxyde. Le polymère peut être par exemple un polystyrène, un polyacrylate, un polyméthacrylate, un polyamide, un polyuréthane, un polyépoxyde, un poly(oxyde d'éthylène), un poly(chlorure de vinyle), ou un polymère nature tel qu'une cellulose, un latex ou une fibre textile naturelle.

Lorsqu'un composé de l'invention est destiné à être fixé sur une molécule biologique, le groupement A ou le groupement G est choisi de préférence dans le groupe constitué par l'ester succinimidyle, l'ester sulfosuccinimidyle, l'isothiocyanate, l'isocyanate, l'iodoacétamide, la maléimide, les halosulfonyles, les phosphoramidites, les alkylimidates, les arylimidates, les halogénoacides, les hydrazines substituées, les hydroxylamines substituées, les carbodiimides. La molécule biologique peut être par exemple une protéine, un nucléotide ou un anticorps.

Un groupe fonctionnel A ou G capable d'interagir avec un composé organique ou un sel métallique dont on souhaite détecter la présence et déterminer la quantité dans un milieu, est un groupe fonctionnel capable de former une liaison forte (liaison covalente ou ionique) ou faible (liaison hydrogène) avec ledit composé à détecter. Comme exemple de tels groupements, on peut citer les groupes amino, ureido, hydroxyle, sulfhydryle, carboxyle, carbonyle ou éther couronne. Un groupement éther couronne permet notamment de détecter des ions alcalins.

Un composé de l'invention peut être destiné à être fixé sur un composé inorganique, notamment pour la réalisation de dispositifs optiques ou optoélectonique (par exemple des diodes électroluminescentes ou des dispositifs photovoltaïques). Le composé inorganique peut être par exemple une silice, une alumine, une zéolithe, un métal, le silicium ou un oxyde de titane. Le groupement A ou le groupe G est dans ce cas choisi parmi les groupes fonctionnels capables de former des liaisons fortes avec des matériaux inorganiques. Par exemple, une fonction carboxylate permet le greffage sur des oxydes de titane, des zéolithe ou l'alumine) ; un groupe thiol ou un groupe thioéther permet la fixation du composé de l'invention sur un métal (par exemple Au ou Ag) ; un groupe siloxane permet la fixation sur la silice et sur la surface oxydée de silicium.

Lorsqu'un composé selon l'invention est destiné à une utilisation reposant sur ses propriétés de fluorescence ou de luminescence, on préfère tout particulièrement les composés qui comprend au moins un substituants Sⁱ qui porte un groupe terminal A chromophore et au moins un substituant Sⁱ portant une fonction de greffage ou au moins un substituant Rⁱ portant une fonction de greffage.

Une famille particulière de composés selon l'invention comprend les composés répondant à la formule (I) qui sont symétriques, c'est-à-dire R² et R⁵ sont identiques, R³ et R⁶ sont identiques, R⁴ et R⁷ sont identiques, S¹ et S² sont identiques. Ils peuvent être représentés par la formule (II) suivante :

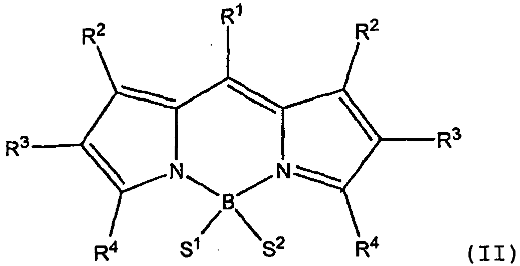

Une autre famille particulière de composés répond à la formule générale (I) dans laquelle les deux substituants de chaque pentacycle forment ensemble un biradical. Ces composés peuvent être représentés par la formule (III) suivante : 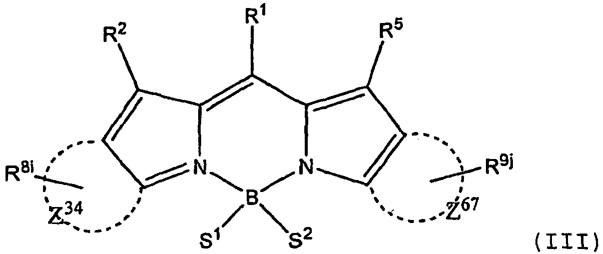 dans laquelle les substituants R⁸ⁱ et R^{9j} sont choisis indépendamment l'un de l'autre dans le groupe défini pour les substituants R¹ à R⁷.

De tels composés peuvent être obtenus à partir des nombreux indoles connus de l'homme de métier du domaine et disponibles dans le commerce.

De manière générale, un composé (I) selon la présente invention est obtenu à partir du difluorure de dipyrrométhènebore correspondant qui répond à une formule (I') identique à la formule (I), S¹ et S² représentant chacun F. Si les substituants R¹ à R⁸ souhaités ne peuvent être obtenus directement à partir du dipyrrométhènebore (I'), le composé (I) est modifié par des réactions appropriées, qui sont à la porté de l'homme de métier.

Un composé (I) dissymétrique est aussi obtenu à partir du difluorure de dipyrométhènebore (I') correspondant. Dans ce cas, (I') peut être obtenu par réaction d'un céto-pyrrole avec un pyrrole en présence d'un acide (par exemple HBr ou l'acide trifluoroacétique (TFA) selon le schéma réactionnel suivant, pour lequel un mode opératoire détaillé est décrit notamment dans US-4,774,339 précité. 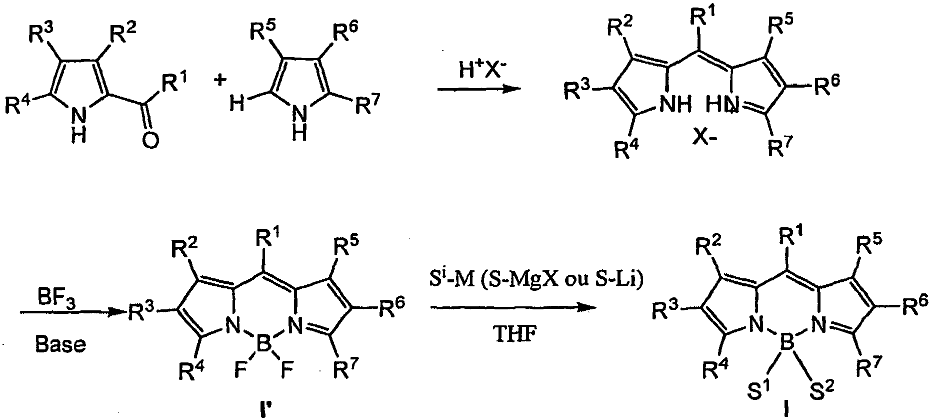 (I') est ensuite soumis à l'action d'un réactif approprié pour remplacer les atomes F pour les substituants souhaités. Le réactif peut être choisi parmi les composés organométalliques, (par exemple un composé organomagnésien ou organolithien), dans un solvant anhydre (par exemple THF), à une température appropriée, entre -20°C et 40°C. X est un atome d'halogène. Pour la préparation d'un composé (I) ayant deux Sⁱ identiques, on utilise deux équivalents de composé organométallique de S, Sⁱ-MX. Pour la préparation d'un composé (I) ayant deux Sⁱ différents, on utilise un mélange 1/1 des deux composés organométalliques S¹-MX et S²-MX, et le produit désiré est séparé par chromatographie.

Un composé (II) symétrique peut être obtenu à partir du difluorure de dipyrrométhènebore (II') correspondant, lui-même obtenu à partir du pyrrole approprié selon le schéma réactionnel suivant : 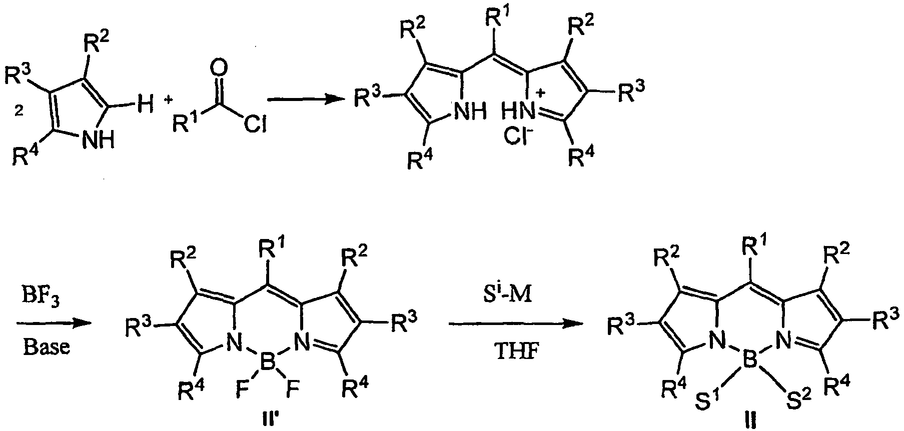 Un procédé analogue est décrit dans US-5,189,029 et dans US-5,446,157. Il consiste à faire réagir le pyrrole avec R¹COCl dans un solvant approprié (par exemple le dichloroéthane ou le toluène), puis à faire réagir l'hydrochlorure de pyrrométhène obtenu dans le même solvant avec un étherate de trifluorobore en présence d'une base pour obtenir le difluorure de dipyrométhènebore (II'). (II') est ensuite soumis à l'action d'un réactif approprié pour remplacer les atomes F pour les substituants souhaités. Le réactif est de même nature que celui utilisé dans l'étape correspondante du procédé de préparation des composés (I) symétriques et les conditions réactionnelles sont similaires.

Selon qu'il est symétrique ou dissymétrique, un composé (III) est obtenu à partir du pyrrole ou des deux pyrroles appropriés, dans lesquels les substituants R³ et R⁴ d'une part, R⁶ et R⁷ d'autre part, forment ensemble un biradical respectivement Z³⁴ et Z⁶⁷ appropriés. Les atomes F sont ensuite remplacés selon des procédés analogues à ceux qui sont mis en oeuvre pour les composés du type (II).

Les substituants Rⁱ qui existent sur les pyrroles disponibles dans le commerce et qui sont utilisables comme produits de départ sont très variés. A titre d'exemple, on peut citer les substituants du type alkyle, phényle, ou ester. Ils peuvent être modifiés pour obtenir les substituants Rⁱ souhaités. Par exemple :
- des fonctions ester terminales peuvent être hydrolysées pour donner l'acide correspondant, qui peut ensuite être activé sous forme de succinimide, par exemple en vue du greffage sur protéine ;
- une fonction nitrophényle peut être réduite (par exemple par l'hydrogène en présence d'un catalyseur approprié), pour donner l'amine aromatique correspondante, qui sera ensuite activée avec du thiophosgène pour obtenir un isothiocyanate, un tel groupement permettant le greffage de composés portant un groupe OH ;
- des fonctions actives terminales qui avait été préalablement protégées par des méthodes connues, peuvent être déprotégées. Par exemple, une amine protégée par un Boc sur le pyrrole, sera déprotégée sur le composé (I) recherché.

La présente invention est illustrée par les exemples suivants, auxquels elle n'est cependant pas limitée.

Dans les exemples 1 à 20, les composés préparés correspondent à la formule générale I R¹, R², R⁴, R⁵ et R⁷ représentent chacun un méthyle, R³ et R⁶ représentent chacun un éthyle (exemples 1 à 17 et 20) ou un hydrogène (exemples 18 et 19). Les composés difluorés utilisés sont des composés qui répondent à l'une des formules I' ou II' et qui sont décrits dans la littérature. Les choix spécifiques des substituants S¹, S² et R¹ pour les 19 composés préparés sont rassemblés dans le tableau I suivant. Ces composés sont des analogues, pour la longueur d'onde d'émission de la fluorescence, respectivement de la Rhodamine 6G (composés des exemples 1 à 17 et 20) et de la Fluoresceine (composés des exemples 18 et 19).

**TABLEAU 1**

| N° | S¹ | S² | R¹ |
|---|---|---|---|
| 1 | toluyl-1-éthynyle | p-CH₃C₆H₄-C≡C- | CH₃- |
| 2 | Me₃Si-C≡C-triméthylsilyl-1-éthynyle | Me₃Si-C≡C- | CH₃- |
| 3 | H-C≡C- éthynyle | H-C≡C- | CH₃- |
| 4 | 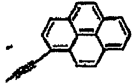 | pyrényl-1-éthynyle | CH₃- |
| | pyrényl-1-éthynyle | | |
| 5 | pyrényl-1-éthynyle | pyrényl-1-éthynyle | Pyrényl-éthynyl-phényle |
| 6 | pyrényl-1-éthynyle | pyrényl-1-éthynyle | iodo-phényle |
| 7 | pyrényl-1-éthynyle | pyrényl-1-éthynyle | acide pentanoic-éthynyl-phényle |
| 8 | pyrényl-1-éthynyle | pyrényl-1-éthynyle | Succinimidyle pentanoate-éthynyl-phényle |
| 9 | pyrényl-1-éthynyle | pyrényl-1-éthynyle | propyl pentanamide-éthynyl-phényle |
| 10 | TMS-C≡C- triméthylsilyl-1-éthynyle | pyrényle-C≡C- | CH₃- |
| 11 | H-C≡C-éthynyle | pyrényle-C≡C- | CH₃- |
| 12 | 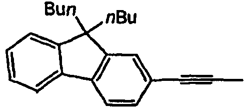 | 9,9-di-(*n*-butyl)-fluorényle-2-éthynyle | CH₃- |
| | 9,9-di-(*n*-butyl)-fluorényyle-2-éthynyle | | |
| 13 | 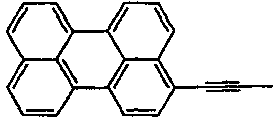 | 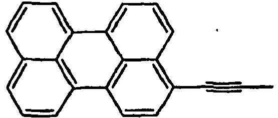 | CH₃- |
| | pérylényl-éthynyle | pérylényl-éthynyle | |
| 14 | naphtyl-2-éthynyle | naphtyl-2-éthynyle | CH₃- |
| 15 | Pyrényl-1-éthynyle | Pyrényl-1-éthynyle | 4'-(2,2' :6',2-terpyridine) |
| 16 | p-CH₃C₆H₄-C≡C- toluyl-1-éthynyle | 6-oxazolin-hex-1-inyle | méthyle |
| | | 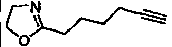 | |
| 17 | pyrényle-C≡C- | 4-oxazoline-phényl-1-éthynylé | p-iodo-phényle |
| | | 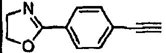 | |
| 18 | pyrényl-1-éthynyl | pyrényl-1-éthynyl | iodo-phényle |
| 19 | pyrényl-1-éthynyl | pyrényl-1-éthynyl | acide pentanoic-éthynyl-phényle |
| 20 | Anthracényl-9-éthynyl | Anthracényl-9-éthynyl | méthyle |

### Exemple 1

### Préparation du composé 1

Le composé 1 est préparé selon le schéma réactionnel suivant :

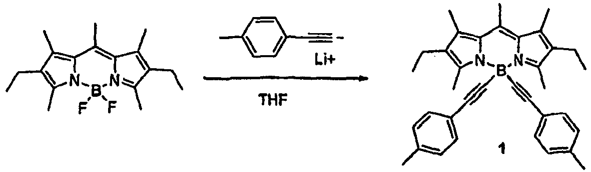

Le 4,4-difluoro-1,3,5,7,8-pentaméthyl-2,6-diéthyl-4-bora-3a,4a-diaza-s-indacène, utilisé comme difluoroboradipyrrométhène, de départ a été préparé selon le mode opératoire suivant. On a introduit 1 g (12,7 mmol) de chlorure d'acétyle et 0,67 g de 3-ethyl-2,4-dimethyl-pyrrole dans du dichlorométhane anhydre, et on a agité à température ambiante pendant 1 jour. Ensuite, on a ajouté de l'éther de pétrole anhydre, et le précipité obtenu après une nuit d'agitation a été filtré, puis dissous dans du toluène. On a ensuite ajouté 1,6 ml de triéthylamine (1,6 ml), puis 2 ml de BF₃Et₂O (2ml) et la solution a été chauffée à 80°C pendant 15 minutes. Après lavage de la phase organique (eau 3x20 ml), et chromatographie sur gel de silice (Hexane/ dichlorométhane, 6 :4), on a obtenu 0,5 g de composé **1'.**

A une solution de p-éthynyltoluène (80 µL, 0,63 mmol) dans du THF anhydre, à -78°C, on a ajouté sous argon du *n-*Butyllithium (1,55 M dans l'hexane, 0,44 ml). Le mélange a été agité pendant 1 h à -78°C, puis 30 mn à température ambiante. La solution jaune pâle ainsi obtenue a été transférée par une canule dans une solution de difluoroboradipyrrométhène 1' (100 mg, 0,31 mmol) dans du THF anhydre. La solution a été agitée pendant 5 mn à température ambiante, puis de l'eau a été ajoutée. Cette solution a été extraite avec du dichlorométhane. Après évaporation, le résidu organique a été purifié par chromatographie sur colonne d'alumine (CH₂Cl₂/cyclohexane, 20:80), et on a obtenu le composé 1 sous forme d'une poudre orange (110 mg, 69%).

### Caractérisation du composé 1

¹H NMR (CDCl₃ 400 MHz) : δ = 7,28 (d, 4H, ³J = 8,0 Hz), 7,0 (d, 4H, ³J = 8,85 Hz), 2,84 (s, 6H), 2,63 (s, 3H), 2,45 (q, 4H, ³J = 7,5 Hz), 2,37 (s, 6H), 2,30 (s, 6H), 1,1 (t, 6H, ³J = 7,5 Hz);
¹³C NMR (CDCl₃, 75 MHz): 151, 9, 139,6, 136,6, 134,2, 132,4, 131,8, 131,4, 130,1, 128,6, 122,6, 21,3, 17,5, 17.2, 15,1, 14,7, 13,9,
¹¹B NMR (CDCl₃, 128 MHz) ; -9,69 (s); UV-Vis (CH₂Cl₂) λ nm (ε, M⁻¹ cm⁻¹) = 515 (68000), 371 (6600), 264 (45600), 252 (47100);
IR (KBr): ν = 2963 (s), 2173 (m), 1555 (s), 1186 (s), 977 (s), 816 (s) ;
FAB⁺ m/z . 511,2 ([M+H]⁺, 100) ;
Analyse élémentaire calculée pour C₃₆H₃₉BN₂ : C, 84,70 ; H, 7,70 ; N, 5,49. Trouvé: C, 84,64 ; H, 7,62 ; N, 5,32.

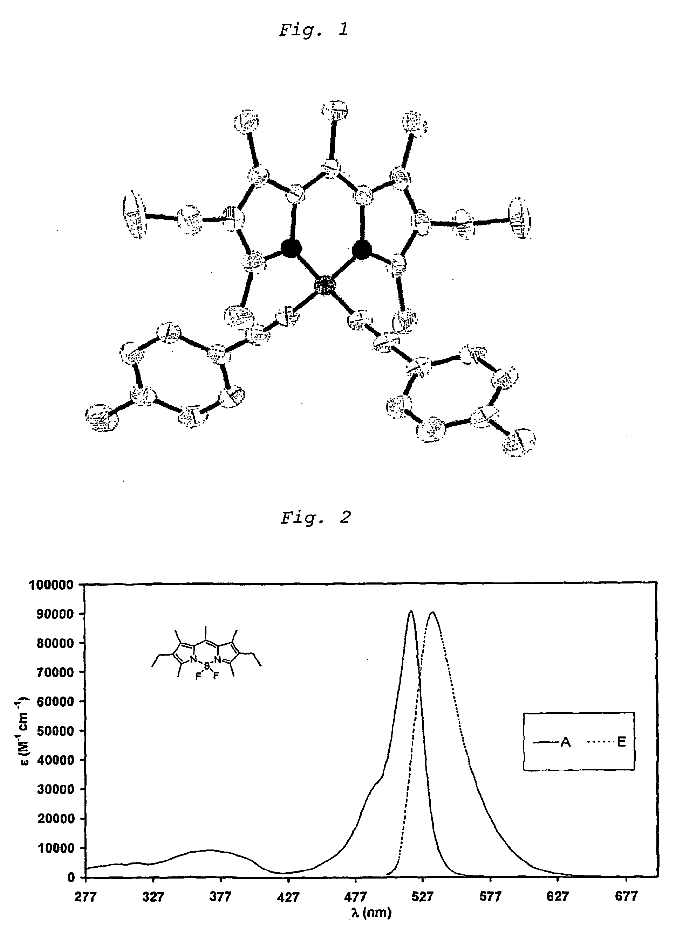

La figure 1 représente la structure du composé 1, obtenue par diffraction des rayons X sur monocristal.

La figure 2 représente les spectres d'absorption (en trait plein, noté A) et d'émission (en pointillé, noté E) (λ_{exc} = 515 nm) du composé de départ 4,4-difluoro-1,3,5,7,8-pentaméthyl-2,6-diéthyl-4-bora-3a,4a-diaza-s-indacène, donné dans US Patent 5,446,157.

### Exemple 2

### Préparation du composé 2

Le composé 2 est préparé selon le schéma réactionnel suivant :

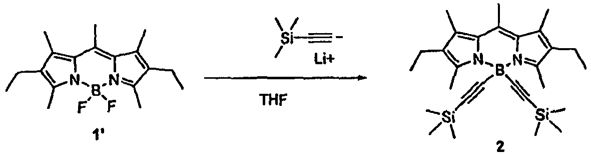

Le difluoroboradipyrrométhène l'utilisé comme produit de départ est identique à celui de l'exemple 1.

A du triméthylsilylacétylène (0,174 ml, 1,26 mmol) dans du THF anhydre (10 ml) sous Argon, a été ajouté du n-Butyl-lithium (1,34 M dans du n-hexane, 0,94 ml) à -78°C. Le mélange a ensuite été agité à -78°C pendant 1 h, puis à température ambiante pendant 30 min. La solution jaune pâle a ensuite été transférée par une canule sur une solution de difluoroboradipyrrométhène (0,2 g, 0,33 mmol) dans du THF anhydre (40 ml). La solution a ensuite été agitée à température ambiante pendant 15 min, jusqu'à consommation complète du produit de départ (suivi par CCM). De l'eau a été ajoutée (10 ml), et la solution extraite avec du CH₂Cl₂ (50 ml). Après évaporation, le résidu organique a été purifié par chromatographie sur colonne d'alumine (CH₂Cl₂/ cyclohexane, 20:80), suivie d'une recristallisation dans un mélange CH₂Cl₂/Hexane, pour obtenir le composé 3 pur (0,21 g, 70 %).

### Caractérisation du composé 2

¹H NMR (CDCl₃ 300 MHz) : δ = 2, 67 (s, 6H), 2,58 (s, 3H), 2,43 (q, 4H, ³J = 7,5 Hz), 2,34 (s, 6H), 1,05 (t, 6H, ³J = 7,5 Hz), 0,09 (s, 6H);
¹³C{1H} NMR (CDCl₃, 75 MHz) : δ =152,0, 139,5, 134,1, 132,4, 130,1, 17,6, 17,3, 15,2, 14,8, 13,9, 0,5 ;
¹¹B NMR (CDCl₃, 128 MHz) ; -11, 10 (s);
UV-Vis (CH₂Cl₂) λ nm (ε, M⁻¹ cm⁻¹) = 516 (42700), 366 (3500), 278 (24000).

### Exemple 3

### Préparation du composé 3

Le composé 3 a été préparé selon le schéma réactionnel suivant, à partir du composé 3.

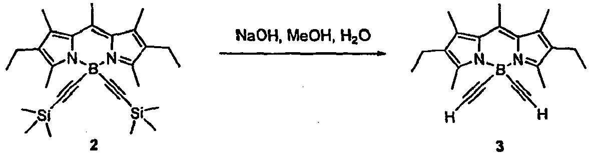

A une solution de composé 2 (210 mg, 0,43 mmol) dans 5 ml of CH₂Cl₂, on a ajouté une solution de soude (345 mg, 20 equiv dans 5 ml de méthanol). Le mélange a été agité deux jours à température ambiante, jusqu'à disparition complète du produit de départ. On a ensuite ajouté de l'eau (10 ml), et la solution a été extraite avec CH₂Cl₂ (50 ml). Après évaporation, la partie organique a été purifiée par chromatographie sur colonne de silice (CH₂Cl₂/cyclohexane, 30:70), suivie par une recristallisation dans CH₂Cl₂/Hexane. Le composé 4 pur est obtenu sous forme de cristaux orangés (92 mg, 60 %);
¹H NMR (CDCl₃ 300 MHz) : δ = 2,72 (s, 6H), 2,61 (s, 3H), 2,43 (q, 4H, ³*J* = 7,5 Hz), 2,34 (s, 6H), 2,17 (s, 2H), 1,06 (t, 6H, ³*J* = 7,5 Hz); ¹³C {¹H} NMR (CDCl₃, 75 MHz) : δ =151, 9, 139,8, 134,8, 132,7, 130,2, 17,5, 17,4, 15,1, 14,8, 14,0 ;
¹¹B NMR (CDCl₃, 128 MHz) ; -11,05 (s); UV-Vis (CH₂Cl₂) λ nm (ε, M⁻¹ cm⁻¹) = 514 (80000), 367 (5100), 280 (10100), 245 (15600).

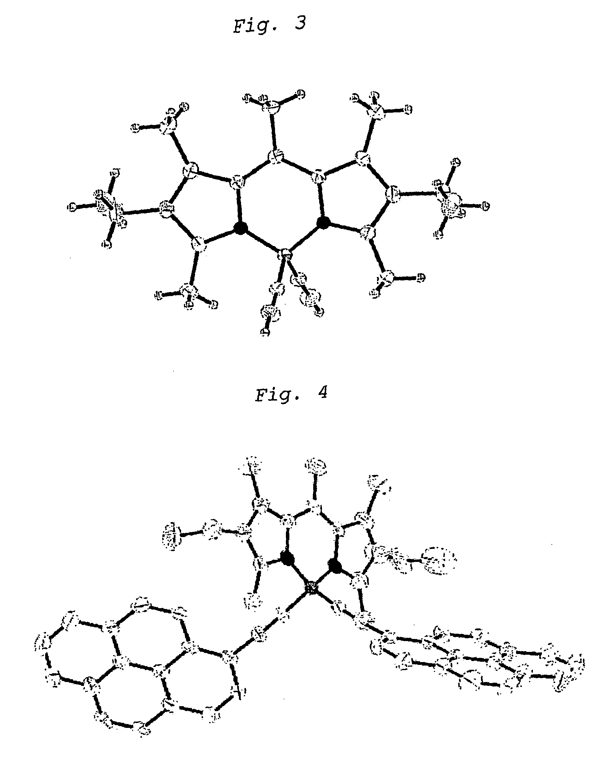

La figure 3 représente la structure du composé 4, obtenue par diffraction des rayons X sur monocristal.

### Exemple 4

### Préparation du composé 4

Le composé 4 est préparé selon le schéma réactionnel suivant

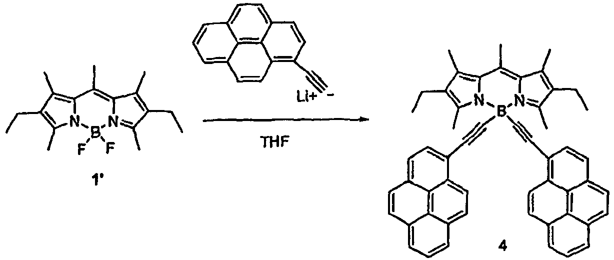

Du n-Butyllithium (1,55 M dans l'hexane, 0,44 ml) a été ajouté à une solution de 1-éthynylpyrène (142 mg, 0,63 mmol) dans du THF anhydre, à -78 °C, sous argon. Le mélange a été agité pendant 1 h à -78°C, puis 30 mn à température ambiante. La solution ainsi obtenue a été transférée par une canule dans une solution de 4,4-difluoro-1,3,5,7,8-pentaméthyl-2,6-diéthyl-4-bora-3a,4a-diaza-s-indacène 1' (100 mg, 0,31 mmol) dans du THF anhydre (20 ml). La solution a été agitée pendant 30 mn à température ambiante, jusqu'à disparition du produit de départ (suivie par CCM), puis de l'eau a été ajoutée. Cette solution a été extraite avec du dichlorométhane. Après évaporation, le résidu organique a été purifié par chromatographie sur colonne d'alumine (CH₂Cl₂/ cyclohexane, 20:80), suivi d'une recristallisation dans un mélange CH₂CL₂/cyclohexane, pour obtenir le composé 5 sous forme de cristaux orange (76 mg, 30%).

### Caractérisation du composé 4

¹H NMR (CDCl₃, 400 MHz) : δ = 8, 75 (d, 2H, ³*J* = 9, 0 Hz), 8,16-7,96 (m, 16H), 3,11 (s, 6H), 2,74 (s, 3H), 2,56 (q, 4H, ³*J* = 7,5 Hz), 2, 45 (s, 6H), 1,17 (t, 6H, ³*J* = 7,5 Hz) ;
¹³C NMR (CDCl₃, 100 MHz): 152, 1, 140,0, 134,7, 132,8, 132,1, 131,4, 131,3, 130,5, 130,4, 129,7, 127,8, 127,43, 127,38, 126,4, 126,0, 125,3, 125,11, 125,08, 124,61, 124,57, 124,4, 94,4, 17,6, 17,4, 15,2, 14,8, 14,5 ;
¹¹B NMR (CDCl₃, 128 MHz): -16,8 (s); UV-Vis (CH₂Cl₂) λ nm (ε, M⁻¹ cm⁻¹) = 516 (73000), 371 (95000), 350 (69000), 286 (93000), 275 (53000), 248 (86000), 241 (80500) ;
IR (KBr): ν = 2960 (s), 2293 (m), 1599 (s), 1430 (s), 1184 (s), 978 (s) ;
FAB⁺ m/z : 731,2 ([M+H]⁺, 100), 505,2 ([M-pyr-≡-]⁺, 25);
Analyse élémentaire calculée pour C₅₄H₄₃BN₂ : C, 88,76; H, 5,93; N, 3,83. Trouvé : C, 88,57; H, 5,77; N, 3,65.

La figure 4 représente la structure du composé 4, obtenue par diffraction des rayons X sur monocristal.

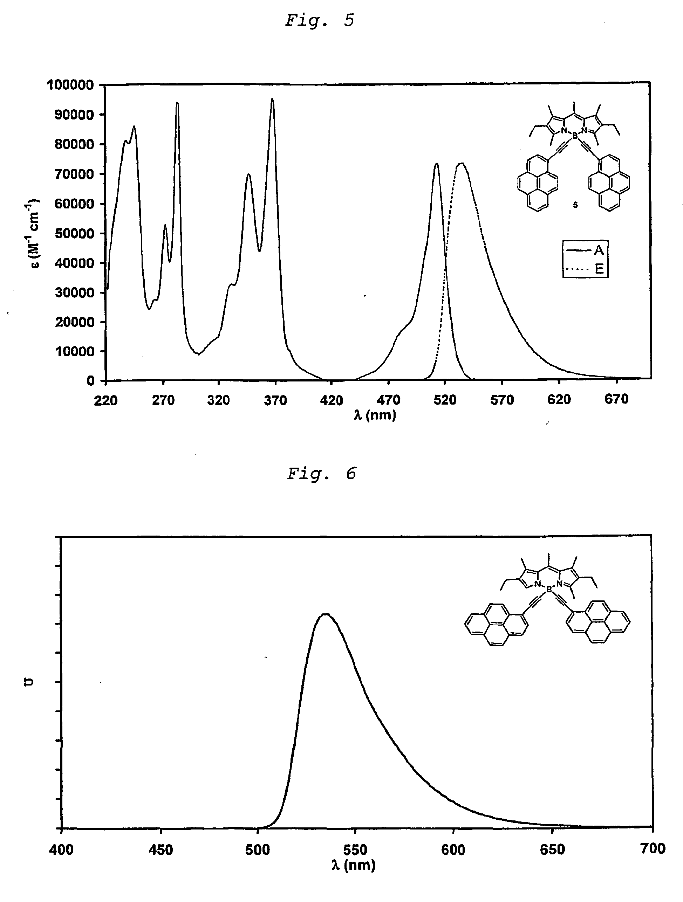

La figure 5 représente les spectres d'absorption (en trait plein, noté A) et d'émission (en pointillé, noté E) (λ_{exc} = 515 nm) du composé 4.

La figure 6 représente le spectre d'émission du composé 4 avec λ_{exc} à 370 nm, et un rendement quantique de 94%.

### Exemple 5

### Préparation du composé 5

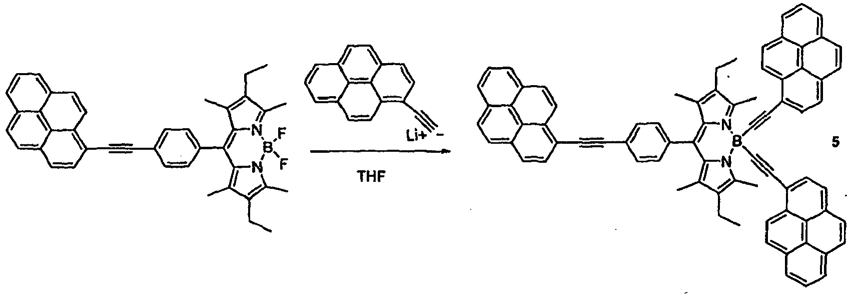

On a préparé le 4,4-difluoro-8-((1-pyrényléthynyl)-4-phényl)-1,3,5,7-tétraméthyl-2,6-diéthyl-4-bora-3a,4a-diaza-s-indacène par un couplage de Sonogashira entre le 1-'éthynyl-pyrène et le 4,4-difluoro-1,3,5,7-tétraméthyl-8-(p-iodophényl)-2,6-diéthyl-4-bora-3a,4a-diaza-s-indacène 2', selon le mode opératoire suivant. On a agité 2 g (7,5 mmol) de chlorure de p-iodo-benzoyle et 2,24 ml (16,5 mmol) de 3-éthyl-2,4-diméthyl-pyrole pendant un jour à 40°C. Ensuite, on a ajouté 6,9 ml de triéthylamine et 7,6 ml de BF₃Et₂O. Le mélange a été agité durant une nuit, puis la phase organique a été lavée à l'eau. On a obtenu 1,2 g de composé 2' par chromatographie sur alumine (hexane/dichlorométhane, 7 :3) et recristallisation dans un mélange hexane/dichlorométhane.

A une solution de 1-éthynylpyrène (37 mg, 0,17 mmol) dans du THF anhydre (10 ml) sous argon, on a ajouté à -78 °C du n-Butyllithium (1,55 M dans *n*-hexane, 0,11 ml), le mélange a été agité à -78°C pendant 1 h, puis à température ambiante pendant 30 mn. La solution vert foncé a alors été transférée par canule dans une solution de 4,4-difluoro-8-((1-pyrényléthynyl)-4-phényl)-1,3,5,7-tétraméthyl-2,6-diéthyl-4-bora-3a,4a-diaza-s-indacène (50 mg, 0,085 mmol) dans du THF anhydre (20 ml). La solution a été agitée a température ambiante pendant 30 min, jusqu'à disparition complète du produit de départ (suivie par CCM). On a alors ajouté de l'eau (5 ml), et la solution a été extraite avec du CH₂Cl₂ (20 ml). Après évaporation, le résidu organique a été purifié par chromatographie sur colonne d'alumine (CH₂Cl₂/cyclohexane, 30:70), suivie par une recristallisation dans un mélange CH₂Cl₂/Hexane, pour obtenir le composé 5 (43 mg, 20 %).

### Caractérisation du composé 5

¹H NMR (CDCl₃ 400 MHz) : δ = 8,84 (d, 2H, ³*J* = 8,9 Hz), 8,76 (d, 1H, ³*J* = 8,9 Hz), 8,30-8,00 (m, 25H), 7,94 (d, 2H, , ³*J* = 8,0 Hz), 3,21 (s, 6H), 2,52 (q, 4H, ³*J* = 7,5 Hz), 1,56 (s, 6H), 1,67 (t, 6H, ³*J* = 7,5 Hz ;
¹³C NMR (CDCl₃, 100 MHz): 154,2, 139,6, 136,7, 136,5, 133,3, 132,3, 132,1, 132,0, 131,5, 131,4, 131,3, 131,2, 131, 1, 130, 4, 129, 71, 129,67, 129,2, 129, 0, 128, 5, 128, 3, 127,8, 127,5, 127,35, 127,27, 126,33, 126,28, 126,0, 125,77, 125,72, 125,5, 125,1, 124,60, 124,56, 124,5, 124,42, 124,36, 124,0, 120,5, 117, 4, 94, 7, 89, 8, 17,5, 14,9, 14,6, 12,3;
¹¹B NMR (CDCl₃, 128 MHz) ; -8,91 (s) ;
UV-Vis (CH₂Cl₂) λ nm (ε, M⁻¹ cm⁻¹) = 523 (72600), 370 (138400), 351 (99000), 285 (133000), 275 (97000), 248 (118300 ;
IR (KBr): ν ≈ 2926 (s), 2169 (m), 1542 (s), 1402 (s), 1179 (s), 843 (s); IR (KBr): ν ≈ 3118 (m), 2926 (s), 2169 (m), 1542 (s), 1402 (s), 1179 (s), 978 (s), 843 (s), 757 (s) ; %
FAB⁺ m/z: 1017.2 ([M+H]⁺ 90), 791,1 ([M-pyr-≡-]⁺, 20 ;
Analyse élémentaire calculée pour C₇₇H₅₃BN₂: C, 90,9 ; H, 5,2 ; N, 2,75. Trouvé: C, 90,6 ; H, 4,9 ; N, 2,48.

### Exemple 6

### Préparation du composé 6

Le composé 6 est préparé selon le schéma réactionnel suivant

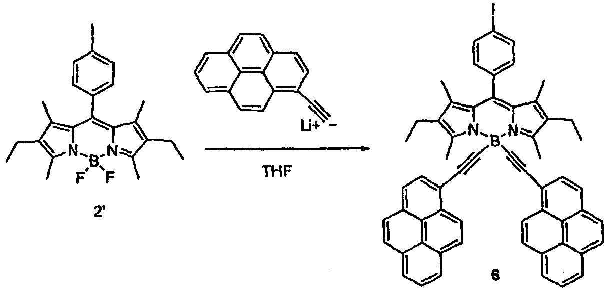

Le 4,4-difluoro-1,3,5,7-tétraméthyl-8-(*p*-iodophényl)-2,6-diéthyl-4-bora-3a,4a-diaza-s-indacène 2' a été préparé selon le mode opératoire décrit ci-dessus.

Du n-Butyllithium (1,55 M dans l'hexane, 0,26 ml) a été ajouté à une solution de 1-éthynylpyrène (89 mg, 0,39 mmol) dans du THF anhydre (10 ml), à -78°C, sous argon. Le mélange a été agité pendant 1 h à -78°C, puis pendant 30 mn à température ambiante. La solution vert foncé ainsi obtenue a été transférée par une canule dans une solution de 4,4-difluoro-1,3,5,7-tétraméthyl-8-(p-iodophényl)-2,6-diéthyl-4-bora-3a,4a-diaza-s-indacène 2' (100 mg, 0,19 mmol) dans du THF anhydre (20 ml). La solution a été agitée pendant 15 mn à température ambiante, jusqu'à disparition du produit de départ (suivie par CCM), puis de l'eau a été ajoutée (10 ml). Cette solution a été extraite avec du dichlorométhane (20 ml). Après évaporation, le résidu organique a été purifié par chromatographie sur colonne d'alumine (CH₂Cl₂ /cyclohexane, gradient de 90 :10 à 70:30), suivie d'une recristallisation dans un mélange CH₂Cl₂/cyclohexane, pour obtenir le composé 6 sous forme de cristaux oranges (132 mg, 76%)

### Caractérisation du composé 6

¹H NMR (CDCl₃ 400 MHz) : δ = 8,78 (d, 2H, ³*J* = 9,0 Hz), 8,17-7,97 (m, 16H), 7,88 (d, 2H, ³*J* = 8,5 Hz), 7,22 (d, 2H, ³*J* = 8,5 Hz), 3, 16 (s, 6H), 2,47 (q, 4H, ³*J* = 7,5 Hz), 1,44 (s, 6H), 1,11 (t, 6H, ³*J* = 7,5 Hz) ;
¹³C NMR (CDCl₃, 75 MHz): 154,3, 138,8, 138,2, 136,3, 136,1, 133,4, 132,1, 131,3, 131,2, 130,7, 130,4, 129,6, 129,1, 127,8, 127,5, 127,3, 126,2, 126,0, 125,1, 124,6, 124,5, 124,4, 120,4, 94,5, 17,7, 15,1, 14,8, 12,5 ;
¹¹B NMR (CDCl₃, 128 MHz) ; -8,92 (s) ;
UV-Vis (CH₂Cl₂) λ nm (ε, M⁻¹ cm⁻¹) = 523 (70300), 370 (95000), 350 (72100), 285 (94000), 274 (56000), 247 (89700) ;
FAB⁺ m/z : 919,1 ([M+H]⁺, 100), 693,2 ([M-pyr-≡-]⁺, 32) ;
Analyse élémentaire calculée pour C₅₉H₄₄BIN₂: C, 77, 13 ; H, 4,83 ; N, 3,05. Trouvé : C, 76,81 ; H, 4,51 : N, 2,75.

### Exemple 8

### Préparation du composé 7

Le composé 7 a été préparé selon le schéma réactionnel suivant :

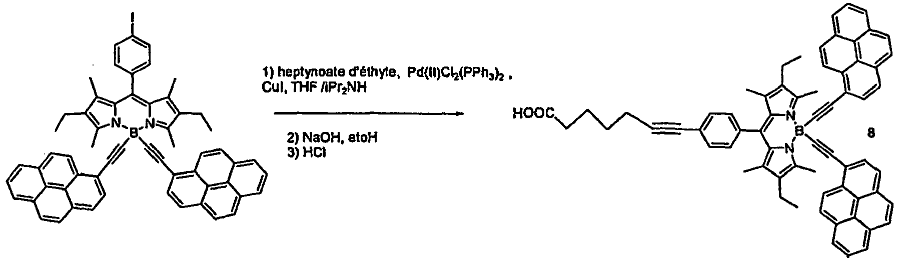

Une solution du composé 6 (0,1 g, 0,110 mmol) et d'ester heptynoïque (0,025 g, 0,165 mmol) a été dégazée pendant 30 minutes dans un mélange THF /iPr₂NH (10 / 1,5 ml). Pd(II)Cl₂(PPh₃)₂ (4 mg, 6% mol) et CuI (2 mg, 10% mol) ont ensuite été ajoutés, et le mélange a été agité à température ambiante pendant 16 heures. A la fin de la réaction, on a ajouté 50 ml d'eau et on a extrait les phases organiques au CH₂Cl₂ (30 ml), puis on les a séchées avec du MgSO₄. L'ester a été obtenu après purification sur une colonne de chromatographie sur alumine (éluant : cyclohexane /CH₂Cl₂ 80/30), puis recristallisation dans du CH₂Cl₂/Hexane (masse obtenue : 0,09 g, 91 %). L'ester a ensuite été chauffé pendant 12 heures à 60°C, dans une solution de EtOH/THF (10/10 ml), en présence d'un excès d'une solution à 1M de NaOH (9,7 ml, 1 mmol). Une solution de HCl diluée a été ajoutée, pour amener le pH à 4, ce qui a entraîné la précipitation de l'acide désiré. Le produit a ensuite été extrait au CH₂Cl₂ (50 ml), lavé deux fois avec de l'eau (50 ml), puis séché par du MgSO₄. L'acide pur a été obtenu après une recristallisation dans du CH₂Cl₂/Hexane (79 mg, rendement de 87 %).

### Caractérisation du composé 7

¹H NMR (CDCl₃, 300 MHz) : 8,77 (d, 2H, ³*J* = 9,0 Hz), 8,17-7,96 (m, 16H), 7,56 (d, 2H, ³*J* = 8,3 Hz), 7,38 (d, 2H, ³*J* = 8,3 Hz), 3,14 (s, 6H), 2,53-2,41 (m, 8H), 1,96-1,83 (m, 2H), 1,77-1,63 (m, 2H), 1,42 (s, 6H), 1,07 (t, 6H, ³*J* = 7,6 Hz) ;
¹³C NMR (CDCl₃, 75 MHz) :154,2, 139,9, 136,7, 136,0, 134,8, 133,3, 132,3, 132,2, 131,5, 131,3, 130,5, 129,8, 129,3, 128,8, 127,9, 127,6, 127,5, 126,4, 124,7, 124,6, 124,5, 124,4, 120,6, 33,3, 28,1, 19,4, 17,6, 15,0, 14,7, 12,3 ;
¹¹B NMR (CDCl₃, 128 MHz) ; -8,92 (s) ;
UV-Vis (CH₂Cl₂) λ nm (ε, M⁻¹ cm⁻¹) = 523 (58100), 370 (75000), 350 (66400), 285 (67200), 274 (56300), 251 (67600);
IR (KBr) : ν = 2962 (s), 2164 (m), 1633 (s), 1544 (s), 1180 (s), 977 (s), 846 (s) ;
FAB⁺ m/z (nature du pic, intensité relative): 917,2 ([M-OH]⁺, 25) ;
Analyse élémentaire calculée pour C₆₇H₅₇BN₂O₂, HCl : C, 83,01 ; H, 6,03 ; N, 2,89. Trouvé: C, 83,08 ; H, 5, 95 ; N, 2,88.

### Exemple 8

Le composé 9 possède une fonction acide activée permettant le greffage sur une protéine ou une autre biomolécule possédant des résidus aminés.

### Préparation du composé 8

Le composé 8 a été préparé selon le schéma réactionnel suivant :

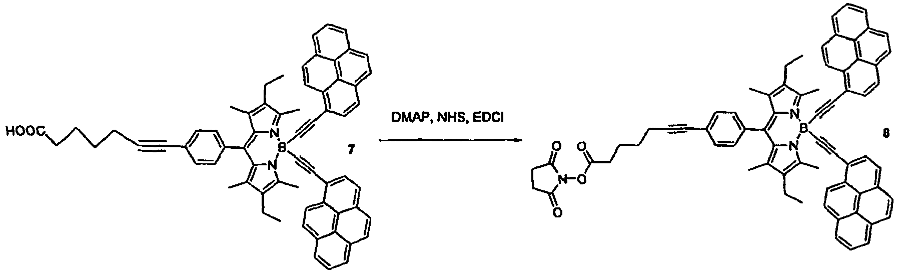

L'acide 7 (30 mg g, 0,033 mmol) dans 10 ml de CH₂Cl₂ a été mis en présence de diméthylaminopyridine (8,4 mg, 0,066 mmol), EDCI (12 mg, 0,066 mmol) et N-hydroxysuccinimide (7,2 mg, 0,066 mmol). Le mélange a été agité à température ambiante, et la réaction a été suivie par plaque CCM. Après disparition totale du composé 8 (1 heure), le mélange a été lavé à l'eau (10 ml), puis séché sur MgSO₄. Le produit pur a été obtenu après purification par une colonne de chromatographie sur silice (éluant : CH₂Cl₂), puis recristallisation dans du CH₂Cl₂/Hexane (masse obtenue : 0,018 g, 54 %).

### Caractérisation du composé 8

¹H NMR (CDCl₃, 300 MHz) : 8.78 (d, 2H, ³*J* = 9.1 Hz), 8,17-7,96 (m, 16H), 7,56 (d, 2H, ³*J* = 8,3 Hz), 7,39 (d, 2H, ³*J* = 8,3 Hz), 3,14 (s, 6H), 2,9 (s, 4H), 2,73 (t, 2H, ³*J* = 7,1 Hz), 2,53 (q, 4H, ³*J* = 7,5 Hz), 2,04-1,94 (m, 2H), 1,82-1,73 (m, 2H), 1,43 (s, 6H), 1,10 (t, 6H, ³*J* = 7,5 Hz) ;
¹³C NMR (CDCl₃, 75 MHz) : 169,2, 168,2, 154,2, 136, 7, 136,0, 133,3, 132,35, 132,34, 132,28, 131,8, 131,5, 130,5, 129,8, 129,4, 128,9, 127,9, 127,6, 127,5, 126,4, 126,1, 125,2, 124,8, 124,7, 124,5, 124,3, 120,7, 90,5, 30,7, 27,8 ; 25,8, 24,0, 19,2, 17,6, 15,0, 14,7, 12,3 ;
¹¹B NMR (CDCl₃, 128 MHz) ; -8,97 (s) ;
UV-Vis (CH₂Cl₂) λ nm (ε, M⁻¹cm⁻¹) = 523 (55000), 370 (70000), 350 (56000), 285 (81000), 274 (57000), 248 (88000) ;
IR (KBr) : ν = 3435 (m), 2960 (s), 2927 (s), 2230 (m), 2169 (m), 1741 (s), 1543 (s), 1431 (s), 1180 (s), 978 (s), 848 (s) ;
Analyse élémentaire calculée pour C₇₀H₅₆BN₃O₄.CH₂Cl₂: C, 77,60; H, 5,32; N, 3,82. Trouvé . C, 77,54; H, 5,28; N, 3, 72.

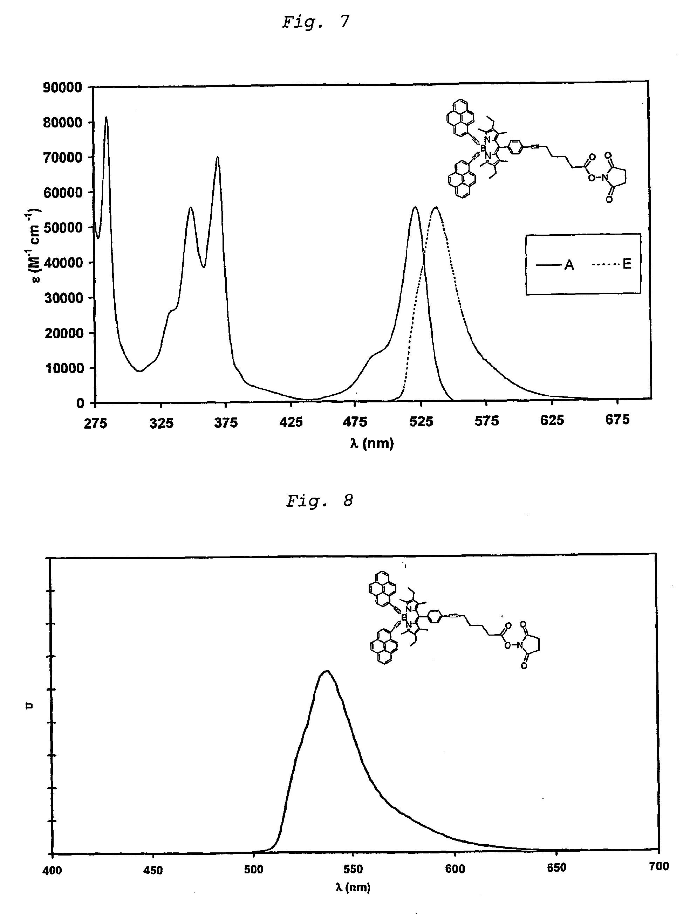

La figure 7 représente les spectres d'absorption (en trait plein, noté A) et d'émission (en pointillé, noté E) (λ_{exc} = 515 nm) du composé **9.**

La figure 8 représente le spectre d'émission du composé **8** avec λ_{exc} à 372 nm, et un rendement quantique de 98%.

### Exemple 9

### Préparation du composé 9

Le procédé de préparation du composé 9 illustre la réaction d'un groupe fonctionnel G particulier d'un composé selon l'invention, avec un groupe amine qui pourrait être celui d'une protéine (par exemple une lysine) ou d'un oligonucléotide modifié qui serait marquée à l'aide d'un composé selon la présente invention. Par exemple, l'association d'une protéine spécifique avec le composé selon la présente invention permettra de détecter les récepteurs biologiques spécifiques à cette protéine.

Le composé 9 a été préparé selon le schéma réactionnel suivant :

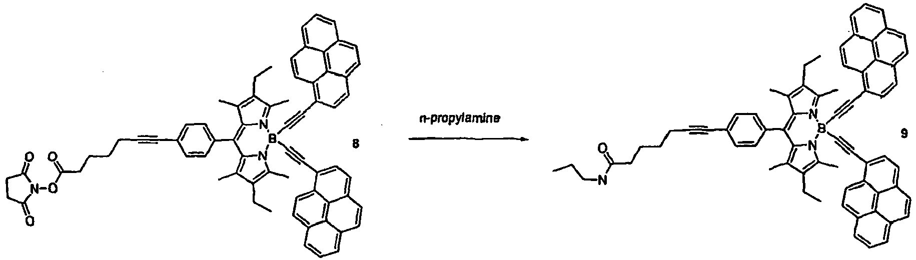

Le composé **8** (10 mg, 0,0099 mmol) a été agité pendant une heure dans 10 ml de *n*-propylamine ; le solvant a ensuite été évaporé, et le solide résultant a été extrait au CH₂Cl₂ (20 ml), puis lavé deux fois à l'eau (20 ml). Le produit pur a été obtenu après purification par une colonne de chromatographie sur silice (gradient d'éluant : CH₂Cl₂/MeOH 100/0 jusqu'à 95/5) (7 mg, 74%).

### Caractérisation du composé 9

¹H RMN (CDCl₃, 300 MHz) : 8,78 (d, 2H, ³*J* = 9,0 Hz), 8,17-7,96 (m, 16H), 7,56 (d, 2H, ³*J* = 8,3 Hz), 7,38 (d, 2H, ³*J* = 8,3 Hz), 3,27 (m, 2H), 3,14 (s, 6H), 2,52-2,42 (m, 6H), 2,25 (t, 2H, ³*J* = 7,2 Hz), 1,98-1,85 (m, 2H), 1,74-1,66 (m, 2H), 1,53 (q, 2H, ³*J* = 7,2 Hz), 1,42 (s, 6H), 1, 10 (t, 6H, ³*J* = 7,4 Hz), 0,93 (t, 3H, ³*J* = 7,4 Hz) ;
¹³C RMN (CDCl₃, 75 MHz):172,7, 154,2, 139,9, 136,6, 136,0, 133,3, 132,29, 132,27, 131,5, 131,3, 130,5, 129,8, 129,3, 128,8, 127,9, 127,6, 127,5, 126,4, 126,1, 125,3, 124,7, 124,6, 124,5, 124,4, 120,6, 91,1, 41,4, 36,5, 28,4, 25,2, 23,2, 19,4, 17,6, 15,0, 14,7, 12,3, 11,5 ;
¹¹B RMN (CDCl₃, 128 MHz) ; -8,97 (s).
UV-Vis (CH₂Cl₂) λ nm (ε, M⁻¹cm⁻¹) = 523 (60700), 370 (88000), 350 (70000), 285 (91000), 274 (57000), 248 (103000); ν = 2962 (s), 2317 (m), 2172 (s), 1711 (m), 1648 (s), 1543 (s), 1180 (s), 847 (s) ;
FAB⁺ m/z (nature du pic, intensité relative): 958.2 ([M]⁺, 100) ;
Analyse élémentaire calculée pour C₆₉H₆₀BN₃O.CH₂Cl₂ : C, 80,61 ; H, 5,99 ; N, 4,03. Trouvé: C, 80,44 ; H, 5,87 ; N, 3,85.

### Exemple 10

### Préparation du composé 10

Le composé 10 a été préparé selon le schéma réactionnel suivant.

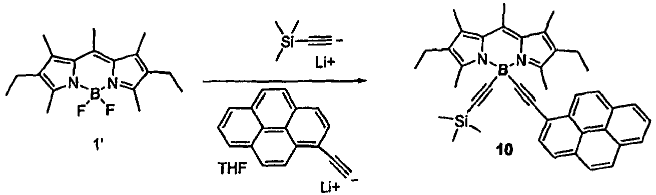

Du 1-éthynylpyrène (71 mg, 0,31 mmol, 1 equiv) et du triméthylsilylacétylène (87 µL, 0,32 mmol, 1 equiv) ont été placés dans deux tubes de Schlenck différents, chacun dans 5 ml de THF anhydre, puis du *n*-Butyllithium (1,34 M, 0,23 ml) a été ajouté à -78°C dans chacun des tubes. Les deux solution ont alors été maintenues à -78°C pendant 1 h et à température ambiante pendant 30 min. Les deux solutions ont été transférées en même temps par canule dans une solution de 4,4-difluoro-1,3,5,7,8-pentaméthyl-2,6-diéthyl-4-bora-3a, 4a-diaza-s-indacène 1' (100 mg, 0,31 mmol) dans du THF anhydre (20 ml). La solution a alors été agitée à température ambiante pendant 10 min, jusqu'à disparition complète du produit de départ. De l'eau a alors été ajoutée (5 ml), et la solution extraite avec CH₂Cl₂ (20 ml). Après évaporation du solvant, le résidu organique a été purifié par chromatographie sur colonne de silice (CH₂Cl₂/ cyclohexane, 20:80). Une recristallisation dans CH₂Cl₂/Hexane, a permis d'obtenir le composé 10 (47 mg, 25 %).

### Caractérisation du composé 10

¹H NMR (CDCl₃, 400 MHz) : δ = 8,62 (d, 1H, ³*J* = 9, 1 Hz), 8,17-8,13 (m, 2H), 8,09-7,95 (m, 6H), 2,90 (s, 6H), 2,65 (s, 3H), 2,49 (q, 4H, ³*J* = 7,5 Hz), 2,38 (s, 6H), 1,12 (t, 6H, ³*J* = 7,5 Hz), 0,18 (s, 9H) ;
¹³C NMR (CDCl₃, 100 MHz): 152,1, 139,8, 134,5, 132,7, 132,3, 131,5, 131,3, 130,4, 130,3, 129,6, 127,7, 127,5, 126,4, 126,1, 125,1, 124,6, 124,4, 120,8, 17,6, 17,4, 15,2, 14,8, 14,3, 0,6 ;
¹¹B NMR (CDCl₃, 128 MHz): -10,2 (s);
UV-Vis (CH₂Cl₂) λ nm (ε, M⁻¹cm⁻¹) = 515 (44200), 368 (30300), 349 (22600), 333 (11200), 285 (31400), 274 (18200), 248 (29000), 242 (28200).

### Exemple 11

Le composé **11** est un composé possédant une fonction Sⁱ acétylénique vraie, cette fonction peut être couplée sur un halogénure aromatique par un couplage au Palladium, de type Sonogashira.

### Préparation du composé 11

Le composé 11 a été préparé selon le schéma réactionnel suivant.

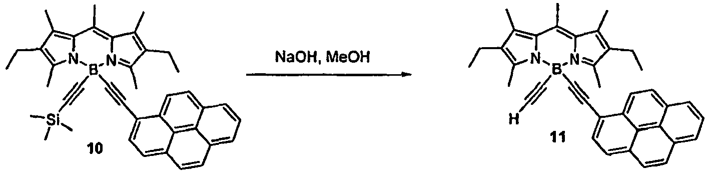

A une solution du composé **10** (85 mg, 0,14 mmol) dans 10 ml de CH₂Cl₂, on a ajouté NaOH (28 mg, 5 equiv) dans 5 ml de MeOH. La solution a été agitée à température ambiante pendant 4 jours, jusqu'à disparition complète du produit de départ (contrôle par CCM). De l'eau (10 ml) a alors été ajoutée et la solution extraite avec du dichlorométhane (50 ml). Après évaporation, le résidu organique a été purifié par chromatographie sur colonne de silice (CH₂Cl₂/ cyclo-hexane, 30:70), suivie d'une recristallisation dans un mélange CH₂Cl₂/Hexane, pour donner le composé 11 (49 mg, 67%).

### Caractérisation du composé 11

¹H NMR (CDCl₃, 400 MHz) : δ = 8,55 (d, 1H, ³*J* = 9,2 Hz), 8,17-8,13 (m, 2H), 8,07-7,95 (m, 6H), 2,93 (s, 6H), 2,68 (s, 3H), 2,50 (q, 4H, ³*J* = 7,5 Hz), 2,40 (s, 6H), 2,67 (s, 1H), 1,12 (t, 6H, ³*J* = 7,5 Hz), 0,18 (s, 9H) ;
¹³C NMR (CDCl₃, 100 MHz): 152,0,139,9, 134,8, 132,9, 132,1, 131,5, 131,3, 130,4, 130,3, 129,8, 127,8, 127,53, 127,46, 126,4, 126,1, 125,2, 124,6, 124,4, 120,5, 17,6, 17,5, 15,2, 14,8, 14,3 ;
¹¹B NMR (CDCl₃, 128 MHz) : -10, 1 (s) ;
UV-Vis (CH₂Cl₂) λ nm (ε, M⁻¹ cm⁻¹) = 516 (60700), 367 (42000), 349 (31500), 285 (46000), 274 (27600), 248 (42000), 241 (39500).

### Exemple 12

### Préparation du composé 12

Le composé 12 a été préparé selon le schéma réactionnel suivant.

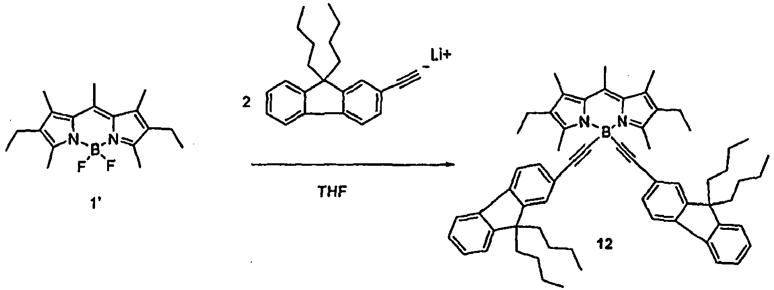

A une solution de 2-éthynylfluorène (95 mg, 0,31 mmol) dans du THF anhydre (10 ml) sous Argon, a été ajouté du *n-*Butyllithium (1,74 M, 0,18 ml) à -78°C et le mélange a été agité à -78°C pendant 1 h, puis à température ambiante pendant une demi-heure. La solution a alors été transférée par une canule dans une solution de 4,4-difluoro-1,3,5,7,8-pentaméthyl-2,6-diéthyl-4-bora-3a, 4a-diaza-s-indacène 1' (50 mg, 0,16 mmol) dans du THF anhydre (10 ml). La solution a été agitée à température ambiante pendant 30 min, jusqu' à la disparition du produit de départ (suivi par CCM). De l'eau est alors ajoutée (5 ml) et le mélange extrait avec CH₂Cl₂ (20 ml). Après évaporation, la partie organique a été purifiée par chromatographie sur colonne de silice (CH₂Cl₂ /cyclohexane, 20:80). Une recristallisation dans un mélange CH₂Cl₂/Hexane, a donné le composé 12 (50 mg, 38 %).

### Caractérisation du composé 12

¹H NMR (CDCl₃, 400 MHz) : δ = 7, 65-7, 62 (m, 2H), 7,55. (d, 2H, ³*J* = 7,7 Hz), 7,39-7,26 (m, 10H), 2,96 (s, 6H), 2,67 (s, 3H), 2,52 (q, 4H, ³*J* = 7,5 Hz), 2,40 (s, 6H), 1,92 (t, 8H, ³*J* = 8,3 Hz), 1,14 (t, 6H, ³*J* = 7,5 Hz), 1,05 (q, 8H, ³*J* = 7,2 Hz), 0,6 (t, 12 H, ³*J* = 7,2 Hz), 0,58-0,50 (m, 8H) ;
¹³C NMR (CDCl₃, 100 MHz) :152, 1, 151,0, 150,4, 141,0, 140,2, 139,8, 134,6, 132,7, 130,8, 130,3, 127,1, 126,8, 125,9, 124,1, 122,9, 119,8, 119,3, 55,0, 40,4, 26,0, 23,2, 17,7, 17,5, 15,2, 14,9, 14,3, 13,9 ;
¹¹B NMR (CDCl₃, 128 MHz): -9,6 (s) ;
UV-Vis (CH₂Cl₂) λ nm (ε, M⁻¹cm⁻¹) =517 (70000), 323 (80000), 297 (62100), 228 (38500).

### Exemple 13

### Préparation du composé 13

Le composé 13 a été préparé selon le schéma réactionnel suivant.

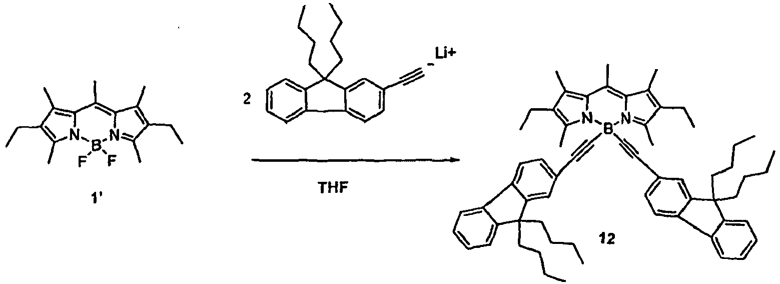

A une solution de 1-éthynylpérylène (45 mg, 0,16 mmol) dans du THF anhydre (5 ml) sous Argon, on a ajouté du n-Butyllithium (1,74 M, 93 µL) à -78°C et le mélange a été agité à -78°C pendant 1 h, puis à température ambiante pendant une demi-heure. La solution a alors été transférée par une canule dans une solution de 4,4-difluoro-1,3,5,7,8-pentaméthyl-2,6-diéthyl-4-bora-3a,4a-diaza-s-indacène (100 mg, 0,082 mmol) dans du THF anhydre (10 ml). La solution a été agitée à température ambiante pendant 30 min, jusqu'à la disparition du produit de départ (suivi par CCM). De l'eau est alors ajoutée (5 ml) et le mélange extrait avec CH₂Cl₂ (20 ml). Après évaporation, la partie organique a été purifiée par chromatographie sur colonne de silice (CH₂Cl₂/ cyclohexane, 20:80). Une recristallisation dans un mélange CH₂Cl₂/Hexane, a donné le produit désiré (20 mg, 15 %).

### Caractérisation du composé 13

¹H NMR (CDCl₃, 400 MHz) : δ = 8,37. (d, 2H, ³*J* = 8,1 Hz), 8,21-8,13 (m, 6H), 8,08. (d, 2H, ³*J* = 8, 1 Hz), 7,67-7,65 (m, 4H), 7,61 (d, 2H, ³*J* = 7,9 Hz), 7,51-7,43 (m, 6H), 3,00 (s, 6H), 2,71 (s, 3H), 2,52 (q, 4H, ³*J* = 7,5 Hz), 2,43 (s, 6H), 1,13 (t, 6H, ³*J* = 7, 5 Hz) ;
¹³C NMR (CDCl₃, 100 MHz): 152,1, 135,4, 134,8, 134,7, 132,9, 131,5, 131,4, 131,3, 130,6, 130,5, 128,7, 127,9, 127,1, 127,0, 126,7, 123,0, 120,63, 120,57, 120,4, 119,9, 17,6, 17,5, 15,3, 14,9, 14,5 ;
¹¹B NMR (CDCl₃, 128 MHz) : -9,4 (s) ;
UV-Vis (CH₂Cl₂) λ nm (ε, M⁻¹cm⁻¹) = 517 (53500), 462 (93000), 435 (64500), 410 (30500), 259 (83000), 228 (83000).

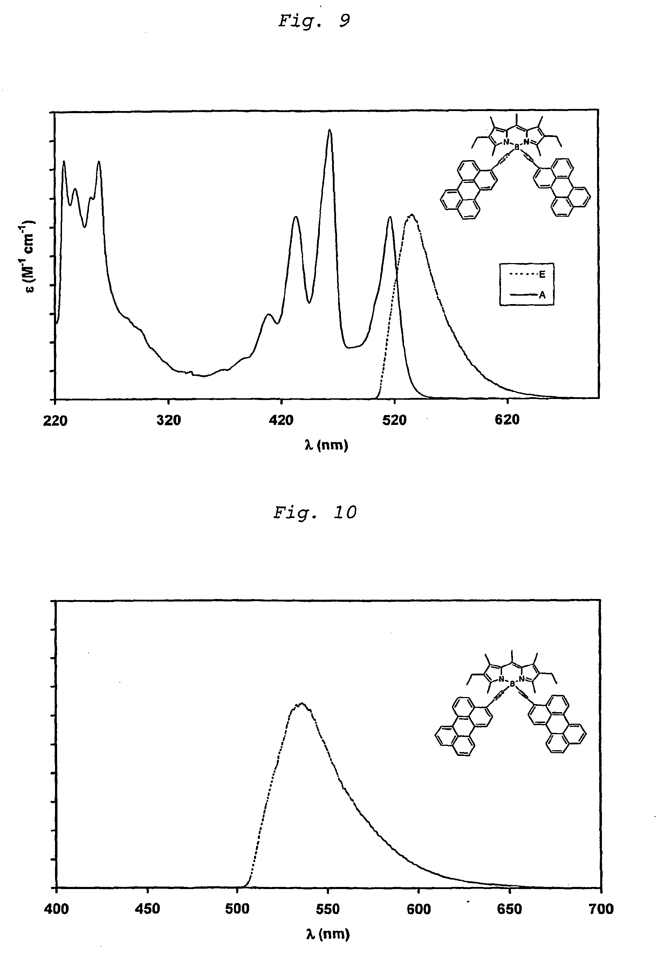

La figure 9 représente les spectres d'absorption (en trait plein, noté A) et d'émission (en pointillé, noté E) (λ_{exc} = 526 nm) du composé 13.

La figure 10 représente le spectre d'émission du composé 13 avec λ_{exc} à 462 nm, et un rendement quantique de 94%.

### Exemple 14

### Préparation du composé 14

Le composé 14 a été préparé selon le schéma réactionnel suivant.

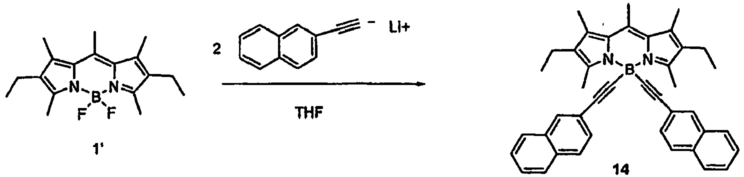

A du 2-éthynylnaphtalène (96 mg, 0,62 mmol) dans du THF anhydre (10 ml) sous Argon a été ajouté du *n*-Butyllithium (1,55 M, 0,44 ml) à -78°C et le mélange a été agité a -78°C pendant 1 h, puis a température ambiante pendant 30 min. Cette solution a ensuite été transférée par une canule dans une solution de 4,4-difluoro-1,3,5,7,8-pentaméthyl-2,6-diéthyl-4-bora-3a, 4a-diaza-s-indacène 1' (100 mg, 0,31 mmol) dans du THF anhydre(20 ml). La solution a été agitée 5 min à 20°C. De l'eau a été ajoutée (10 ml), et la solution a été extraite avec du CH₂Cl₂ (50 ml). Après évaporation, le résidu organique a été purifié par chromatographie sur une colonne d'alumine (CH₂Cl₂/cyclohexane, 10:90), suivie par une recristallisation dans un mélange CH₂Cl₂/Hexane, pour donner le composé 15 pur (130 mg, 72 %).

### Caractérisation du composé 14

¹H NMR (CDCl₃ 300 MHz): δ = 7,89 (s, 2H), 7, 77-7, 68 (m, 6H), 2,93 (s, 6H), 2,67 (s, 3H), 2,50 (q, 4H, ³*J* = 7,5 Hz), 2,39 (s, 6H), 1,12 (t, 6H, ³*J* = 7,5 Hz) :
¹³C NMR (CDCl₃, 75 MHz) : 152, 1, 139, 8, 134,6, 133,2, 132,7, 132,4, 130,9, 130,3, 129,2, 127,7, 127,6, 127,5, 126,2, 125,9, 123,1, 17,6, 17,4, 15,2, 14,8, 14, 2 ;
¹¹B NMR (CDCl₃, 128 MHz) ; -9,63 (s) ;
UV-Vis (CH₂Cl₂) λ nm (ε, M⁻¹cm⁻¹) : 517 (77700), 303 (29900), 292 (34500), 284 (27300), 255 (110000), 246 (97500)
IR (KBr): ν = 3413 (s), 2961 (s), 2172 (s), 1554 (s), 1184 (s), 1184 (s), 978 (s) ;
FAB⁺ m/z (nature du pic, intensité relative) : 583,1 ([M+H]⁺, 100), 431,2 ([M-naphta-≡-]⁺, 15) ;
Analyse élémentaire calculée pour C₄₂H₃₉BN₂ : C, 86, 59 H, 6,75 ; N, 4,81. Trouvé : C, 86,32 ; H, 6,52 ; N, 4,62.

### Exemple 15

### Préparation du composé 15

Le composé 15 a été préparé selon le schéma réactionnel suivant.

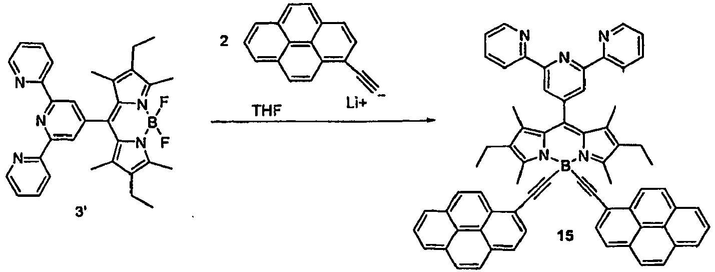

On a préparé le 4,4-difluoro-8-(2,2':6',2"-terpyridine-4'-yl)-1,3,5,7-tétraméthyl-2,6-diéthyl-4-bora-3a,4a-diaza-s-indacène selon le mode opératoire suivant. On a agité 0,5 g (1,91 mmol) de 4'-(formyl-2, 2':6,2 "-terpyridine), 0,57 ml (4,2 mmol) de 3-éthyl-2,4-diméthyl-pyrrole dans l'acide trifluoroacetique pendant une semaine à température ambiante, puis on a ajouté 0,42 g (1,9 mmol) de dicyano-dichloroquinone et on a agité le mélange pendant 4 heures de plus. Ensuite, on a ajouté 0,5 ml de triéthylamine et 0,35 ml de BF₃.Et₂O et on a agité la solution pendant 1 journée de plus. Le mélange a été finalement lavé avec une solution saturée de NaHCO₃, la phase organique séchée, puis chromatographiée sur alumine (hexane/dichlorométhane, 7 :3), pour donner 0,73 g de composé 3'.

A du 1-éthynylpyrène (41 mg, 0,179 mmol) dans du THF anhydre(5 ml) sous argon a été ajouté du *n*-Butyllithium (1,55 M, 0,15 ml) à -78°C et le mélange a été agité à -78°C pendant 1 h, puis à température ambiante pendant 30 min. La solution vert foncé a alors été transférée par une canule dans une solution de 4,4-difluoro-8-(2,2':6',2"-terpyridine-4'-yl)-1,3,5,7-tétraméthyl-2,6-diéthyl-4-bora-3a,4a-diaza-s-indacène 3' (48 mg, 0,089 mmol) dans du THF anhydre (10 ml). La solution a été agitée à température ambiante pendant 10 min, jusqu'à la disparition complète du produit de départ (contrôle par CCM). De l'eau a alors été ajoutée (5 ml), et la solution extraite avec du dichlorométhane CH₂Cl₂ (20 ml). Après évaporation, la fraction organique a été purifiée par chromatographie sur colonne d'alumine (CH₂Cl₂/cyclohexane, 20:80), suivie par une recristallisation dans CH₂Cl₂/Hexane, pour donner le produit désiré 15 (25 mg, 30 %).

### Caractérisation du composé 15

¹H NMR (CDCl₃ 400 MHz) : δ = 8,82 (d, 2H, ³*J* = 9,0 Hz), 8,75-8,69 (m, 6H), 8,22-7,98 (m, 16H), 7,91 (dt, 2H, ³*J* = 8,0 Hz, ⁴*J* = 2,0 Hz), 7,37 (m, 2H), 3,15 (s, 6H), 2,45 (q, 4H, ³*J* = 7,6 Hz), 1,57 (s, 6H), 1,09 (t, 6H, ³*J* = 7,5 Hz) ;
¹³C NMR (CDCl₃, 75 MHz): 156,4, 155,7, 154,6, 149,5, 147,1, 137,0, 136,3, 133,6, 132,3, 131,5, 131,4, 130,5, 129,9, 128,6, 128,0, 127,6, 127,5, 126,5, 126,1, 125,3, 125,2, 124,75, 124,70, 124,6, 124,3, 121,5, 121,3, 120,8, 17,2, 15,0, 14,7, 12,9 ;
¹¹B NMR (CDCl₃, 128 MHz) ; -8,92 (s) ;
UV-Vis (CH₂Cl₂) λ nm (ε, M⁻¹cm⁻¹) = 526 (70000), 370 (103000), 358 (78000), 285 (111400), 275 (74400), 248 (106000) ;
IR (KBr) : : ν = 2961 (s), 2164 (m), 1582 (s), 1402 (s), 1178 (s), 978 (s), 845 (s) ;
FAB⁺m/z (nature du pic, intensité relative) : 948,2 ([M+H]⁺, 100), 722,2 ([M-pyr-≡-]⁺, 20) ;
Analyse élémentaire calculée pour C₆₈H₅₀BN₅ : C, 86, 16 ; H, 5,32 ; N, 7,39, Trouvé: C, 85,95 ; H, 5,12 ; N, 7,27.

### Exemple 16

Ce composé présente une fonctions acide qui est protégée sous forme d'oxazoline, et qui peut être déprotégée par les procédés à la portée de l'homme de métier.

### Préparation du composé 16

Le composé 16 a été préparé selon le schéma réactionnel suivant.

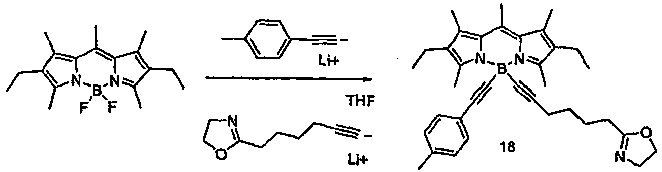

Du 6-oxazoline-hex-1-yne (47 mg, 0,31 mmol) et du p-éthynyltoluène (40 µL, 0,31 mmol) ont été dissous dans deux tube de Schlenck différents, dans du THF anhydre (5 ml) sous Argon. Du *n*-Butyllithium (1,34 M dans le n-hexane, 0,23 ml) a alors été ajouté à -78°C dans chaque Schlenck et les deux solutions ont été agitées pendant une heure à -78 °C, puis à température ambiante pendant 30 min. Les deux solution ont ensuite été transférées simultanément par canule dans une solution de 4,4-difluoro -1,3,5,7,8 pentaméthyl-2,4-diéthyl-4-bora-3a,4a-diaza-s-indacène 1' (100 mg, 0,31 mmol) dans du THF anhydre (20 ml), à température ambiante. La solution a été agitée à température ambiante pendant 20 min, jusqu'à disparition complète du produit de départ (contrôle par CCM). De l'eau a alors été ajoutée (5 ml), et la solution extraite avec du CH₂Cl₂ (20 ml). Après évaporation, la partie organique a été purifiée par chromatographie sur colonne de silice (CH₂Cl₂/cyclohexane, 20:80), suivie d'une recristallisation dans un mélange CH₂Cl₂/Hexane, pour obtenir le composé 16 pur (22 mg, 13 %).

### Caractérisation du composé 16

¹H NMR (C₆D₆, 300 MHz) : δ = 7,43 (d, 2H, ³*J* = 8,1 Hz), 6, 76 (s, 2H, ³J = 8,1.Hz), 3,59 (t, 2H, ³J = 8,8 Hz), 3,43 (t, 2H, ³J = 8,8 Hz), 3,11 (s, 6H), 2,26 (q, 4H ³J = 7,5 Hz), 2,17-2,11 (m, 4H), 2,01 (s, 3H), 1,99 (s, 6H), 1,95 (s, 3H), 1,80-1,70 (m, 2H), 1,50-1,42 (m, 2H), 0,94 (t, 6H, ³J = 7,5 Hz) ;
¹³C{¹H} NMR (C₆D₆, 75 MHz) :167,3, 151, 9, 190,0, 136,6, 133,9, 132, 4, 131,9, 130, 8, 129,1, 66, 7, 54,9, 30,5, 29,2, 27,8, 25,7, 21,2, 20,0, 17,7, 16,9, 15,2, 14,5 :
¹¹B(¹H)NMR (C₆D₆, 128 MHz): -9,40 (s) ;
UV-Vis (CH₂Cl₂) λ nm (ε, M⁻¹cm⁻¹) = 515 (54700), 370 (4350), 262 (24000), 251 (24500).

### Exemple 17

Ce composé présente une fonction acide protégée sous forme d'oxazoline, qui peut être déprotégée en utilisant les méthodes connu de l'homme de métier.

### Préparation du composé 17

Le composé 17 a été préparé selon le schéma réactionnel suivant.

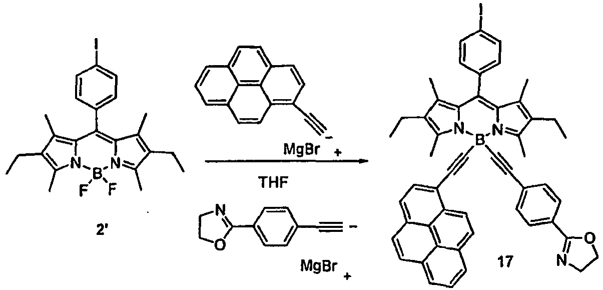

Du 1-éthynyl-4-oxazolin-phényl(35 mg, 0,20 mmol) et du 1-éthynylpyrène (45 mg, 0,2 mmol) ont été dissous dans deux différents tubes de Schlenk dans du THF anhydre THF (5 ml) sous Argon. Du bromure d'éthylmagnésium (1,0 M dans THF, 0,2 ml) a été rajouté dans chaque tube de Schlenk à -78°C et les deux solutions ont été agitées à température ambiante pendant trois heures. Les deux solutions anioniques ont été transférées simultanément par canules dans une solution de 4,4-difluoro-8-(4-iodophényl)-1,3,5,7-tétraméthyl-4-bora-3a,4a-diaza-s-indacène 2' (100 mg, 0,2 mmol) dans du THF anhydre (20 ml). La solution a été chauffée à reflux pendant une nuit, jusqu'à consommation complète du produit difluoré de départ (contrôle par CCM). De l'eau (5 ml) a ensuite été ajoutée, et la solution extraite avec CH₂Cl₂ (20 ml). Après évaporation, la partie organique a été purifiée par chromatographie sur colonne de silice (CH₂Cl₂/cyclohexane, 20:80), suivie d'une recristallisation dans un mélange CH₂Cl₂/Hexane, pour donner le composé 17 (35 mg, 26 %).

### Caractérisation du composé 17

¹H NMR (CDCl₃, 200 MHz) : δ = 8,62 (d, 1H, ³J = 9,1 Hz), 8,18-7,83 (m, 12H), 7,51 (d, 2H, ³J = 8,6 Hz), 7,19-7,13 (m, 2H), 4,47 (t, 2H, ³J = 9,1 Hz), 4,08 (t, 2H, ³J = 9,1 Hz), 2,99 (s, 6H), 2,42 (q, 4H, ³J = 7,5 Hz), 1,39 (s, 6H), 1,08 (t, 6H, ³J = 7,5 Hz) ;
¹³C NMR {¹H} (C₆D₆, 75 MHz) :167, 6, 154,6, 138, 3, 136, 6, 136,3, 132,0, 130,8, 130,7, 130,1, 129,7, 129,1, 128,7, 126,6, 126,3, 125,6, 125,5, 125,2, 124,9, 67,2, 55,3, 17,6, 14,7, 14,9, 12,1 ;
¹¹B NMR {¹H} (C₆D₆, 128 MHz) : -8,56 (s) ;
UV-Vis (CH₂Cl₂) λ nm (ε, M⁻¹cm⁻¹) = 525 (58200), 380 (50700), 350 (38100), 286 (90500), 276 (78100), 249 (64300).

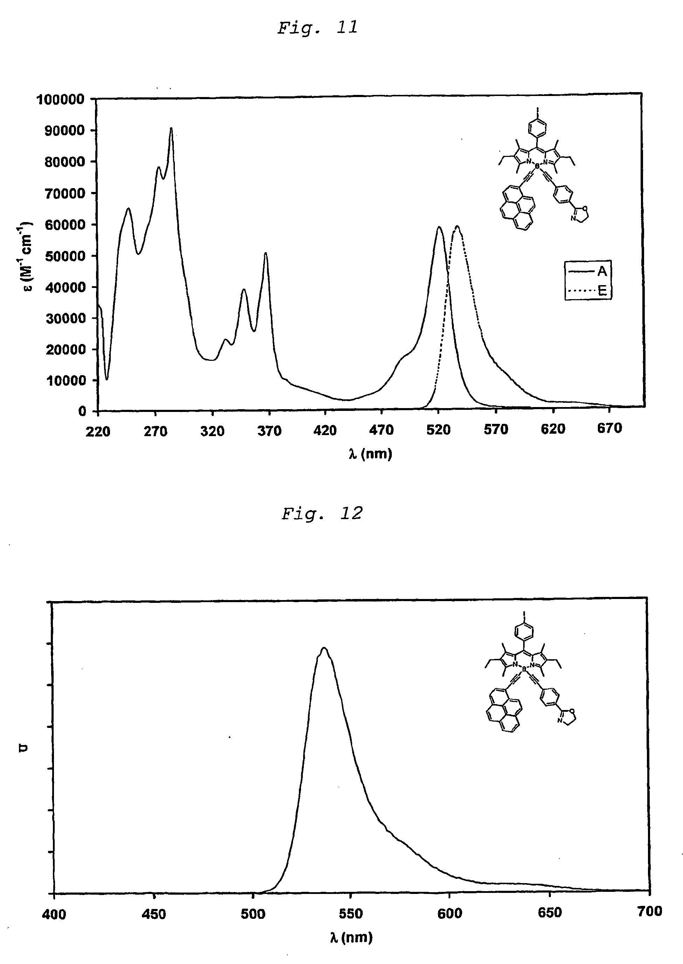

La figure 11 représente les spectres d'absorption (en trait plein, noté A) et d'émission (en pointillé, noté E) (λ_{exc} = 516 nm) du composé 17.

La figure 12 représente le spectre d'émission du composé 17 avec λ_{exc} à 380 nm, et un rendement quantique de 53%.

### Exemple 18

### Préparation du composé 18

Le composé **18** est préparé selon le schéma réactionnel suivant

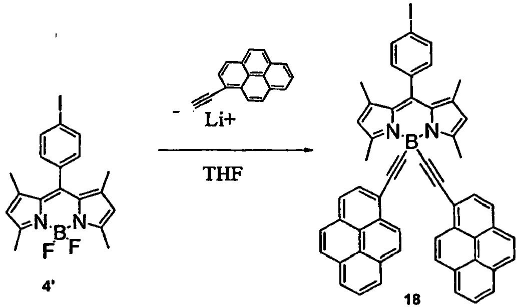

Le 4,4-difluoro-1,3,5,7-tétraméthyl-8-(p-iodophényl)-4-bora-3a,4a-diaza-s-indacène **4'** a été préparé suivant le mode opératoire suivant. 1,17 g de chlorure de p-iodo-benzoyle et 1 ml de 2,4-diméthyl-pyrole ont été agité pendant un jour à température ambiante. On a ensuite ajouté 3,7 ml de triéthylamine et 4,5 ml de BF₃Et₂O. Le mélange a été agité pendant une nuit, puis la phase organique a été lavée à l'eau. Une chromatographie sur alumine (hexane/ dichlorométhane, 7 : 3), et une recristallisation dans un mélange hexane/dichlorométhane ont donné 0,9 g de composé **4'.**

Une solution de n-butyllithium 1,27 M dans l'hexane (0,304 ml) a été ajoutée à une solution de 1-éthynylpyrène (100 mg, 0,44mmol) dans du THF anhydre (10ml), à -78°C, sous argon. Le mélange a été agité pendant 1 h à -78°C, puis pendant 30 mn à température ambiante. La solution ainsi obtenue a été transférée par une canule dans une solution de 4,4-difluoro-1,3,5,7-tétraméthyl-8-(p-iodophényl)-4-bora-3a,4a-diaza-s-indacène (80 mg, 0,176 mmol) dans du THF anhydre (10 ml). La solution a été agitée pendant 15 mn à température ambiante, jusqu'à disparition du produit de départ (suivie par CCM), puis de l'eau a été ajoutée (10 ml). Cette solution a été extraite avec du dichlorométhane (20 ml). Après évaporation, le résidu organique a été purifié par chromatographie sur colonne d'alumine (CH₂Cl₂ / cyclohexane, gradient de 90:10 à 70:30), suivie d'une recristallisation dans un mélange CH₂Cl₂/ cyclohexane, pour obtenir le composé 7 sous forme de cristaux oranges (76mg, 50%).

### Caractérisation du composé 20

¹H NMR (CDCl₃ 400 MHz) : δ = 8,79 (d, 2H, ³*J* = 9,3 Hz), 8,18-7,99 (m, 16H), 7,89 (d, 2H, ³*J* = 8,5 Hz), 7,21 (d, 2H, ³*J* = 8, 2 Hz), 6.20 (s, 2H), 3,17 (s, 6H), 1,53 (s, 6H)
¹³C NMR (CDCl₃, 100 MHz): 156,3, 141,6, 140,7, 138,6, 135,6, 132,5, 131,7, 131,6, 130,9, 130,7, 130,1, 128,3, 127,9, 127,7, 126,6, 126,4, 125,5, 125,0, 124,9, 124,8, 122,4, 120,7, 95,4, 94,9, 17,0, 15,4;
¹¹B NMR (CDCl₃, 128 MHz) ; -8, 87 (s) ;
UV-Vis (CH₂Cl₂) λ nm (ε, M⁻¹cm⁻¹) = 501 (70000), 471sh (16200), 369 (89000), 349 (69700), 285 (94000)

### Exemple 19

### Préparation du composé 19

Le composé **19** est préparé selon le schéma réactionnel suivant

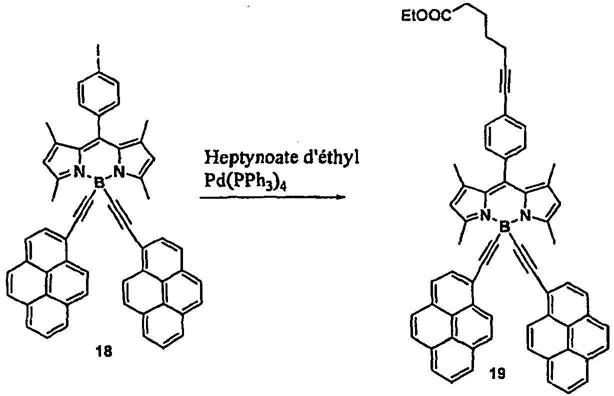

Une solution du composé **18** (0,07 g, 0,081 mmol) et d'ester heptynoïque (0,025 g, 0,162 mmol) a été dégazée pendant 30 minutes dans un mélange THF /iPr₂NH (10 / 1,5 ml). Pd(II)Cl₂(PPh₃)₂ (4 mg, 6% mol) et CuI (2 mg, 10% mol) ont ensuite été ajoutés, et le mélange a été agité à température ambiante pendant 16 heures. A la fin de la réaction, on a ajouté 50 ml d'eau et on a extrait les phases organiques au CH₂Cl₂ (30 ml), puis on les a séchées avec du MgSO₄. L'ester a été obtenu après purification sur une colonne de chromatographie sur alumine (éluant : cyclohexane /CH₂Cl₂ 80/30), puis recristallisation dans du CH₂Cl₂/Hexane (masse obtenue : 0,06 g, 83%).

### Caractérisation du composé 19

¹H NMR (CDCl₃ 300 MHz) : δ = 8,80 (d, 2H, ³*J* = 9,2 Hz), 8,18-7,96 (m, 16H), 7,48 (ABsys, 4H, *J_{AB}* = 8,3, νoδ = 58.5Hz), 6.20 (s, 2H), 4,16 (q, 2H, ³*J* = 6Hz), 3,17 (s, 6H), 2,49-2,37 (m, 4H), 1,90-1,69 (m, 4H), 1,53 (s, 6H), 1,28 (t, 3H, ³*J* = 6Hz).
¹³C NMR (CDCl₃, 100 MHz): 173,4, 1555,7, 141,4, 141,3, 134,9, 132,2 (CH), 132,1, 131,3, 131,2, 130,4, 129,8, 129,7 (CH), 128,4 (CH), 127,9 (CH), 127,5 (CH), 127,3(CH), 126,2 (CH), 126,0 (CH), 125,2 (CH), 125,1 (CH), 124,6, 124,5, 124,4 (CH), 121,9 (CH), 120,4, 94,9, 91,0, 82,6, 80,5, 60,3 (CH₂), 33,9 (CH₂), 30,9 (CH₃), 28,1 (CH₂), 24,3 (CH₂), 19,2 (CH₂), 16,6 (CH₃), 14,9 (CH₃)
UV-Vis (CH₂Cl₂) λ nm (ε, M⁻¹cm⁻¹) = 501 (65900), 471sh (15900), 369 (87000), 349 (69500), 285 (94000).

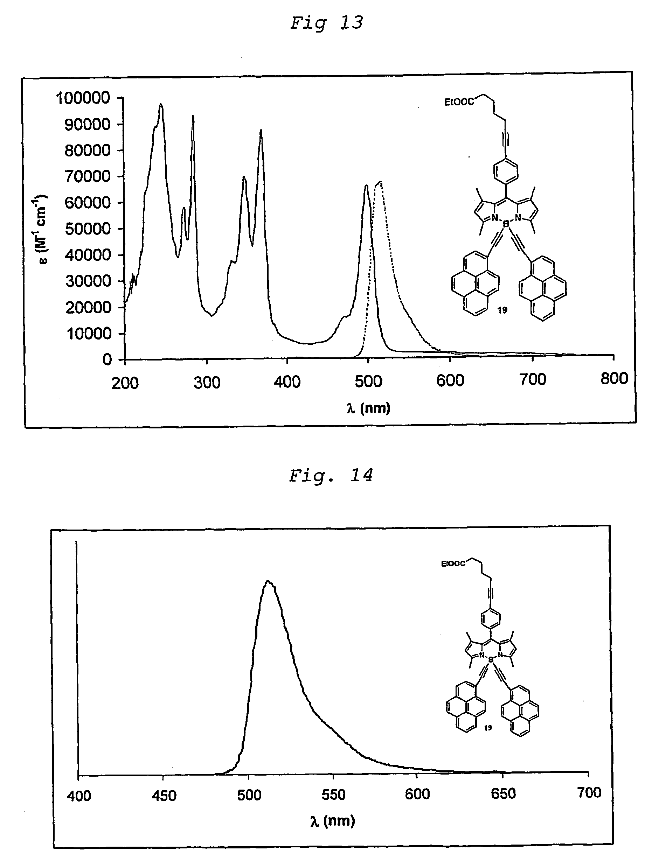

La figure 13 représente les spectres d'absorption (en trait plein, noté A) et d'émission (en pointillé, noté E) (λ_{exc} = 501 nm) du composé 19.

La figure 10 représente le spectre d'émission du composé **19** avec λ_{exc} à 369 nm, et un rendement quantique de 40%.

### Exemple 20

### Préparation du composé 20

Le composé **20** a été préparé selon le schéma réactionnel suivant, à partir du composé 3 et d'un halogénure d'aryle. Cette réaction est un exemple de couplage de type Sonogashira sur le composé 3, destiné à modifier les substituants S1 et S2.

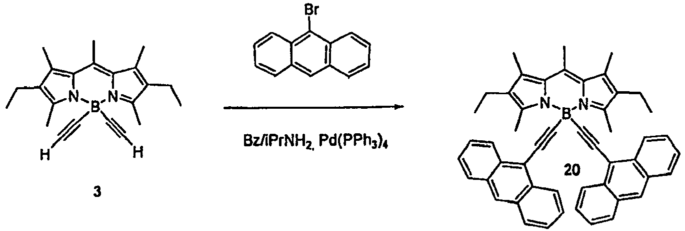

Dans un récipient Schlenk, on a dégazé pendant 20 min une solution de benzène/iPr₂NH (50:50) contenant 57 mg (0,18 mmol) du composé 3 et 92 mg (0,36 mmol) de 9-bromoanthracène. On a ensuite ajouté 12,5 mg (6% mol) de [Pd(PPh₃)₄] et le mélange a été chauffé sous agitation à 60°C, sous argon, pendant 16 h. Après évaporation du solvant, une chromatographie sur support (CH₂Cl₂/cyclohexane, 10:90), suivie d'une recristallisation dans CH₂Cl₂/Hexane à permis d'obtenir le composé 20 pur (31 mg, 25%).

### Caractérisation du composé 20

¹H NMR (CDCl₃, 400 MHz): δ = 8,60-8,56 (m, 4H), 8,24 (s, 2H), 7,90-7,85 (m, 6H), 7,38-7,32 (m, 6H), 2,70 (s, 3H), 2,42 (q, 4H, ³*J* = 7,5 Hz), 2,43 (s, 6H), 1,04 (t, 6H, ³*J* = 7,5 Hz); ¹³C {¹H} NMR (CDCl₃, 100 MHz) : 132,9, 131,4, 128,5, 127,7, 126,1, 126,0, 125,7, 125,5, 123,0, 120,63, 120,57, 120, 4, 119, 9, 17,6, 17, 5, 15, 3, 14, 93, 14, 92; ¹¹B {¹H} NMR (CDCl₃, 128 MHz): -9,4 (s); UV-Vis (CH₂Cl₂) λ nm (s, M⁻¹cm⁻¹) = 517 (81300), 411 (40000), 390 (38000), 262 (173000) ; IR (KBr): ν = 2960 (m), 2926 (m), 2146 (m), 1594(m), 1554 (s), 1439 (s), 1185 (s), 1122 (m), 977 (m), 878 (m), 736 (m); FAB⁺ m/z (nature du pic, intensité relative): 683,2 ([M+H]⁺, 100) ;
Anal. Calc. pour C₅₀H₄₃BN_{2.}: C, 87, 96: H, 6,35; N, 4, 10. Trouvé: C, 87,63; H, 5,97; N, 3,81.

Les propriétés de fluorescence des composés 1 à 20 ont été déterminées. Le tableau ci-dessous donne la longueur d'onde d'absorption λ_{abs}, la longueur d'onde d'émission λₑₘ, le déplacement de Stokes ΔS calculé selon la formule ΔS = (1/λ_{abs}) - (1/λₑₘ), le coefficient d'extinction molaire ε, et le rendement quantique relatif Φ, mesuré dans le dichlorométhane à 20°C. Le rendement quantique Φ relatif a été mesuré en utilisant comme référence la Rhodamine 6G dans l'eau ( Φ=76%, λ_{exc}=488 nm) dont la détermination exacte par calorimétrie du rendement quantique est décrite dans J. Phys. Chem.,83, 1979, 2581). A l'exception des composés **1, 2, 3** et **16** qui ne possèdent pas de groupes chromophores dans la région proche ultra-violet/bleu, tous les composés décrits dans les exemples présentent des déplacements de Stokes entre 3000 et 12300 cm⁻¹ lorsqu'ils sont excités entre 320 et 460 nm, et pour des rendements quantiques de fluorescence très élevés.

Le ΔS des composés 1', 2' et 3' est donné à titre comparatif.
- Le composé 1' désigne le composé 4,4-difluoro-1,3,5,7,8-pentaméthyl-2,6-diéthyl-4-bora-3a,4a-diaza-s-indacène qui est à comparer avec les composés obtenus dans les exemples 1, 4, 10-13.
- le composé 2' désigne le composé 4,4-difluoro-1,3,5,7-tètramèthyl-8-(p-iodophényl)-2,6-diéthyl-4-bora-3a,4a-diaza-s-indacène qui est à comparer avec les composés obtenus dans les exemples 7, 8, 17.
- le composé 3' désigne le composé 4,4-difluoro-1,3,5,7-tetraméthyl-8-(2,2':6',2"-terpyridine-4'-yl))-2,6-diéthyl-4-bora-3a,4a-diaza-s-indacène qui est à comparer avec le composé de l'exemple 14.
- le composé 4' désigne le composé 4,4-difluoro-1,3,5,7-tétraméthyl-8-(p-iodophényl)-4-bora-3a,4a-diaza-s-indacène qui est à comparer avec les composés obtenus dans les exemples 18 et 19.

**Tableau 2**

| N° | Λ_{abs} (nm) | λₑₘ (nm) | ΔS (cm⁻¹) | ε(M⁻¹ cm⁻¹) | Φ |
|---|---|---|---|---|---|
| 1 | 515 | 535 | 725- | 68000 | 98% |
| 2 | 513 | 532 | 696 | 43000 | 95% |
| 3 | 514 | 534 | 728 | 80000 | 92% |

| N° | Λ_{abs} (nm) | λₑₘ (nm) | ΔS (cm⁻¹) | _{.}ε(M⁻¹ cm⁻¹) | Φ |
|---|---|---|---|---|---|
| 4 | 516 | 535 | 688 | 73000 | 94% |
| | 371 | 535 | 8263 | 95000 | 90% |
| | 350 | 535 | 9880 | 69000 | 92% |
| 5 | 523 | 538 | 533 | 73000 | 98% |
| | 370 | 538 | 8440 | 140000 | 97% |
| | 350 | 538 | 9984 | 100000 | 98% |
| 6 | 522 | 538 | 570 | 70300 | 80% |
| | 371 | 538 | 8367 | 95000 | 78% |
| | 352 | 538 | 9822 | 72500 | 78% |
| 7 | 522 | 537 | 535 | 60000 | 80% |
| | 373 | 537 | 8188 | 75000 | 80% |
| | 353 | 537 | 9707 | 66500 | 79% |
| 8 | 522 | 538 | 570 | 55000 | 98% |
| | 372 | 538 | 8294 | 70000 | 95% |
| | 353 | 538 | 9741 | 55000 | 95% |
| 9 | 522 | 538 | 570 | 61000 | 82% |
| | 373 | 538 | 8222 | 88000 | 51% |
| | 352 | 538 | 9822 | 70200 | 55% |
| 10 | 515 | 533 | 655 | 44200 | 90% |
| | 368 | 533 | 8412 | 30300 | 92% |
| | 342 | 533 | 10478 | 23000 | 95% |
| 11 | 516 | 532 | 588 | 60700 | 80% |
| | 367 | 532 | 8451 | 42000 | 73% |
| | 349 | 532 | 9856 | 31500 | 75% |
| 12 | 517 | 535 | 650 | 70000 | 95% |
| | 323 | 535 | 12268 | 80000 | 90% |
| | 297 | 535 | - | 62100 | 90% |
| 13 | 517 | 536 | 685 | 53000 | 94% |
| | 462 | 536 | 2988 | 93000 | 93% |
| | 435 | 536 | 4332 | 64500 | 90% |
| 14 | 517 | 535 | 650 | 78000 | 90% |
| | 303 | 535 | 14300 | 30000 | 31% |
| | 292 | 535 | 15554 | 34500 | 32% |
| 15 | 526 | 590 | 2062 | 70000 | 40% |
| | 370 | 590 | 10078 | 103000 | 50% |
| | 358 | 590 | 10984 | 78000 | 50% |
| 16 | 515 | 534 | 690 | 54700 | 73% |
| 17 | 525 | 539 | 495 | 58200 | 83% |
| | 380 | 539 | 7763 | 50700 | 53% |
| | 350 | 539 | 10078 | 38100 | 53% |
| 18 | 501 | 514 | 504 | 70000 | 40% |
| | 369 | 514 | 7645 | 89000 | 37% |
| | 349 | 514 | 9200 | 70000 | 41% |
| 19 | 501 | 514 | 504 | 66000 | 47% |
| | 370 | 514 | 7570 | 87000 | 40% |
| | 350 | 514 | 9120 | 69500 | 42% |
| 20 | 517 | 538 | 755 | 81300 | 98% |
| | 411 | 538 | 5750 | 41000 | 98% |
| 1' | 517 | 538 | 755 | 64500 | 83% |
| 2' | 524 | 537 | 460 | 75900 | 78% |
| 3' | 529 | 548 | 655 | 72000 | 87% |
| 4' | 500 | 510 | 392 | 47100 | 64% |

La comparaison des caractéristiques des composés 1', 2', 3' et 4' avec les composés correspondant de la présente invention montre que le remplacement d'un atome F par un substituant -C≡C-L'-A permet en général de multiplier le ΔS au minimun par 10. De plus, si l'on compare les composés 6 et 18, on constate qu'avec une excitation unique autour de 370 nm, l'on observera deux émissions différentes pour chacun des composés. Cette propriété fait des molécules de l'invention de bons candidats pour l'utilisation pour le marquage multicouleur.

## Revendications

1. Composés répondant à la formule générale (I) 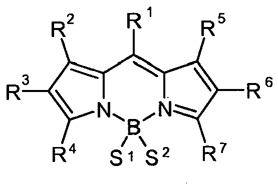 dans laquelle :
• chacun des substituants R¹, R², R³, R⁴, R⁵, R⁶ et R⁷ est choisi indépendamment des autres dans le groupe constitué par H, les groupements -L-H, les groupements -G et les groupements -L-G,
ou bien les deux substituants R³ et R⁴ forment ensemble un groupement divalent Z³⁴ et/ou les deux substituants R⁶ et R⁷ forment ensemble un groupement divalent Z⁶⁷, lesdits groupements divalents étant tels qu'ils forment avec les atomes de carbone auxquels ils sont attachés une structure choisie dans le groupe constitué par un cycle ou deux cycles condensés, chaque cycle ayant 5 ou 6 atomes et comprenant des atomes de carbone et au plus deux hétéroatomes choisis parmi N, O et S ;
• L est un groupement de liaison constitué par une liaison simple, ou par un ou plusieurs segments choisi parmi les groupes alkylène et les groupes alkénylène linéaires ou ramifiés comprenant éventuellement dans leur chaîne un ou plusieurs atomes d'oxygène formant des groupements éther, les alkynylènes, et les arylènes comprenant un seul noyau ou comprenant plusieurs noyaux condensés ou non condensés ;
• G est un groupement fonctionnel choisi parmi :
- les groupes polaires choisis parmi les groupes amide, sulfonate, sulfate, phosphate, ammonium quaternaire, hydroxyle, phosphonate, et les segments polyéthylèneoxyde,
- les groupes donneurs d'électrons ou électroattracteurs choisis parmi les groupes cyano, nitro, fluoroalkyle, perfluoroalkyle, amide, nitrophényle, triazino substitué, sulfonamide, alkényle et alkynyle, et le groupe de liaison L étant alors choisi parmi les segments alkénylène ou alkynylène ayant de 2 à 4 atomes de carbone,
- les groupements fonctionnels réactifs qui permettent le greffage dudit composé sur une molécule biologique, et les groupes capables de réagir avec un composé organique en formant une liaison forte ou faible avec ledit composé et
- choisis parmi H, les groupes trialkyl- silyle et une fonction réticulable lorsque le composé est un polymère,
- choisis parmi l'ester succinimidyle, l'ester suifosuccinimi- dyle, l' isothiocyanate, l'isocyanate, l'iodoacétamide, la maléimide, les halosulfonyles, les phosphoramidites, les alkylimidates, les arylimidates, les halogénoacides, les hydrazines substituées, les hydroxylamines substituées, les carbodiimides lorsque le composé est une molécule biologique, ou
- choisis parmi les groupes amino, ureido, hydroxyle, sulfhydryle, carboxyle, carbonyle et éther couronne lorsque le composé est un composé organique,
- les groupes capables de réagir avec un composé inorganique en formant une liaison forte ou faible avec ledit composé et choisis parmi les groupes carboxylate lorsque le composé inorganique est un oxyde de titane, une zéolithe ou l'alumine, un thiol ou un thioéther lorsque le composé inorganique est un métal ou un siloxane lorsque le composé inorganique est la silice ou une surface oxydée de silicium;
• les substituants S¹ et S² représentent indépendamment l'un de l'autre un groupement choisi dans le groupe défini pour les substituants R¹ à R⁷ ou un groupement répondant à la formule -C≡C-L'-A dans laquelle :
- L' est une liaison simple ou un groupement choisi dans le groupe défini pour L, et
- A est:
- un groupe chromophore choisi parmi :
- les groupements aryle ayant un noyau aromatique portant éventuellement des substituants ;
- les groupements aryle ayant au moins deux noyaux condensés, et portant éventuellement au moins un substituant ;
- les groupements ayant des propriétés de colorant,
- un groupe fonctionnel capable de se fixer sur une molécule biologique choisi dans le groupe constitué par l'ester succinimidyle, l'ester sulfosuccinimidyle, l'isothiocyanate, l'isocyanate, l'iodoacétamide, la maléimide, les halosulfonyles, les phosphoramidites, les alkylimidates, les arylimidates, les halogénoacides, les hydrazines substituées, les hydroxylamines substituées et les carbodiimides,
- un groupe fonctionnel capable de se fixer sur un composé inorganique choisi parmi une fonction carboxylate, thiol, thioéther et siloxane,
- un groupe fonctionnel capable de se fixer sur un composé polymère, ledit groupe fonctionnel étant choisi parmi H, les trialkylsilyles, une fonction réticulable, ou
- un groupe fonctionnel capable de se fixer sur un composé organique ou un sel organique, ledit groupe fonctionnel étant choisi parmi amino, ureido, hydroxyle, sulfhydryle, carboxyle, carbonyle ou éther couronne;
**caractérisé en ce qu'**au moins l'un des substituants S¹ et S² est un groupe -C=C-L'-A dans lequel A est un groupe chromophore.

2. Composé selon la revendication 1, **caractérisé en ce que** le groupe de liaison L est constitué par au moins un segment choisi parmi une liaison simple, un segment alkylène ayant de 1 à 10 atomes de carbone, un segment phénylène, par un segment alkynylène ayant de 2 à 4 atomes de carbone, un segment alkénylène ayant de 2 à 4 atomes de carbone et un segment polyéther ayant de 1 à 12 atomes d'oxygène.

3. Composé selon la revendication 1, **caractérisé en ce que** chacun des substituants S¹ et S² est un groupe -C≡C-L'-A dans lequel A est un groupe chromophore.

4. Composé selon l'une des revendications 1 ou 3, **caractérisé en ce que** L' est une liaison simple ou un segment alkylène ayant de 1 à 10 atomes de carbone ou un segment polyéther ayant de 1 à 12 atomes de carbone et A représente un groupement chromophore.

5. Composé selon la revendication 1, **caractérisé en ce que** le groupement aryle ayant un noyau aromatique portant éventuellement des substituants est choisi parmi le p- toluyle, le styrényle, le pyridinyle, les oligopyridinyles, le thiényle, et le pyrrolyle.

6. Composé selon la revendication 1, **caractérisé en ce que** le groupement aryle ayant au moins deux noyaux condensés est choisi parmi le naphtyle, le pyrényle, le l'anthracényle, le phénanthrényle, le quinolyle, le phénanthronyle, le pérylényle, le fluorényle, le carbazolyle et l'acridinyle, lesdits groupements portant éventuellement au moins un substituant.

7. Composé selon la revendication 1, **caractérisé en ce que** le groupement qui a des propriétés de colorant est choisi parmi les groupements coumarinyle, hydroxycoumarinyle, alkoxycoumarinyle, trisulfonatopyrényle, cyanine, styrylpyridinium, naphtalimidinyle et phénylphénanthridium.

8. Composé selon la revendication 1, **caractérisé en ce que** l'un au moins des substituants S¹ et S² est un groupe -C≡C-L'-A ou l'un au moins des substituants R¹ à R⁷ est un groupe -L-G, dans lesquels A ou G est un groupement qui permet de fixer ledit composé sur un autre composé.

9. Composé selon la revendication 8, **caractérisé en ce que** L' ou L est une liaison simple ou un alkylène ayant de 1 à 10 atomes de carbone ou un segment polyéther ayant de 1 à 12 atomes de carbone.

10. Composé selon la revendication 8, pouvant être fixé sur un polymère, **caractérisé en ce que** le groupement A ou le groupement G est choisi parmi H, les groupes trialkyl- silyle, ou une fonction réticulable.

11. Composé selon la revendication 1, **caractérisé en ce que** la fonction réticulable est choisie parmi les groupes méthacrylate, vinyle, styryle, anilino, pyrrolyle, thiophényle, furyle, isocyanato, et époxyde.

12. Composé selon la revendication 8 pouvant être fixé sur une molécule biologique, **caractérisé en ce que** le groupement A ou le groupement G est choisi dans le groupe constitué par l'ester succinimidyle, l'ester suifosuccinimidyle, l'isothiocyanate, l'isocyanate, l'iodoacétamide, la maléimide, les halosulfonyles, les phosphoramidites, les alkylimidates, les arylimidates, les halogénoacides, les hydrazines substituées, les hydroxylamines substituées, les carbodiimides.

13. Composé selon la revendication 8 pouvant être fixé sur un composé organique, **caractérisé en ce que** le groupe fonctionnel A ou G est un groupe fonctionnel capable de former une liaison forte (liaison covalente ou ionique) ou faible (liaison hydrogène) avec un composé à détecter.

14. Composé selon la revendication 13, **caractérisé en ce que** le groupe fonctionnel A ou G est choisi parmi les groupements amino, ureido, hydroxyle, sulfhydryle, carboxyle, carbonyle ou éther couronne.

15. Composé selon la revendication 8, pouvant être fixé sur un composé inorganique, **caractérisé en ce que** le groupement A ou le groupe G est choisi parmi les groupes fonctionnels capables de former des liaisons fortes avec des matériaux inorganiques.

16. Composé selon la revendication 15, pouvant être fixé sur des oxydes de titane, des zéolithes ou l'alumine, **caractérisé en ce que** le groupe A ou G est une fonction carboxylate.

17. Composé selon la revendication 15, pouvant être fixé sur un métal, **caractérisé en ce que** A ou G est un groupe thiol ou un groupe thioéther.

18. Composé selon la revendication 19, pouvant être fixé sur la silice et sur la surface oxydée de silicium, **caractérisé en ce que** le groupe A ou G est un groupe siloxane.

19. Composé selon la revendication 1, **caractérisé en ce que** l'un des substituants S¹ et S² est un groupement -C≡C-L'-A, et l'autre substituant est choisi parmi les groupements aryle mononucléaires portant éventuellement un substituant, et les groupements aryle comprenant au moins deux noyaux condensés.

20. Composé selon la revendication 1, **caractérisé en ce qu'**il est symétrique et répond à la formule (II)

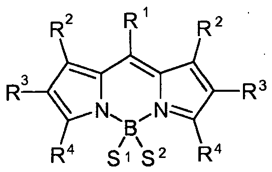

21. Composé selon la revendication 1, **caractérisé en ce que** les substituants R³ et R⁴ forment ensemble un cycle avec le pentacycle que les porte, et les substituants R⁵ et R⁷ forment ensemble un cycle avec le pentacycle que les porte.

22. Composé selon la revendication 21, **caractérisé en ce qu'**il répond à la formule (III) 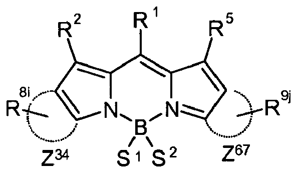 dans laquelle les substituants R⁸ⁱ et R^{9j} sont choisis indépendamment l'un de l'autre dans le groupe défini pour les substituants R¹ à R⁷.

23. Utilisation d'un composé selon l'une des revendications 1 à 22 comme marqueur fluorescent.

24. Utilisation d'un composé selon l'une des revendications 1 à 22 comme matériau électroluminescent.

## Patentansprüche

1. Verbindungen, die der allgemeinen Formel (I) 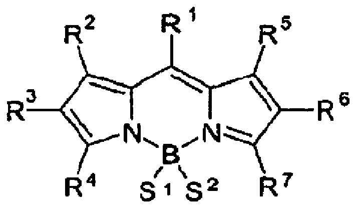 entsprechen,
wobei:
• jeder der Substituenten R¹, R², R³, R⁴, R⁵, R⁶ und R⁷ unabhängig von den anderen aus der Gruppe ausgewählt wird, die aus H, -L-H-Gruppen, -G-Gruppen und -L-G-Gruppen besteht, oder die beiden Substituenten R³ und R⁴ gemeinsam eine zweiwertige Gruppe Z³⁴ bilden und/oder die beiden Substituenten R⁶ und R⁷ gemeinsam eine zweiwertige Gruppe Z⁶⁷ bilden, wobei die zweiwertigen Gruppen derart sind, dass sie mit den Kohlenstoffatomen, an die sie gebunden sind, eine Struktur ausbilden, die aus der Gruppe ausgewählt wird, die aus einem oder zwei kondensierten Ringen besteht, wobei jeder Ring 5 oder 6 Atome hat und Kohlenstoffatome und höchstens zwei Heteroatome umfasst, die aus N, O und S ausgewählt werden,
• L eine Bindungsgruppe ist, die aus einer Einfachbindung oder einem oder mehreren Segmenten besteht, die aus Alkylgruppen und linearen oder verzweigten Alkenylgruppen, die in ihrer Kette gegebenenfalls ein oder mehrere Sauerstoffatome umfassen, die Ethergruppen bilden, Alkinylgruppen und Arylgruppen, die einen einzigen Ring umfassen oder mehrere kondensierte oder nicht kondensierte Ringe umfassen, ausgewählt werden,
• G eine funktionelle Gruppe ist, die ausgewählt wird aus:
- polaren Gruppen, die aus Amid-, Sulfonat-, Sulfat-, Phosphat-, Quartärammonium-, Hydroxyl-, Phosphonat-Gruppen und Polyethylenoxidsegmenten ausgewählt werden,
- Elektronendonator- oder elektro-attraktiven Gruppen, die aus den Cyano-, Nitro-, Fluoralkyl-, Perfluoralkyl, Amid-, Nitrophenyl-, substituierten Triazin-, Sulfonamid-, Alkenyl- und Alkinyl-Gruppen und der Bindungsgruppe L, die aus Alkenyl-oder Alkinyl-Segmenten mit 2 bis 4 Kohlenstoffatomen ausgewählt wird, ausgewählt werden,
- reaktiven funktionellen Gruppen, die ein Aufpfropfen der Verbindung auf ein biologisches Molekül ermöglichen, und Gruppen, die in der Lage sind, mit einer organischen Verbindung zu reagieren, wobei sie eine starke oder eine schwache Bindung mit der Verbindung eingehen, und die
- aus H, Trialkyl-Silyl-Gruppen und einer vernetzbaren Funktion ausgewählt werden, wenn die Verbindung ein Polymer ist,
- aus Succinimidylester, Sulfosuccinimidylester, Isothiocyanat, Isocyanat, Iodacetamid, Maleimid, Halosulfonyl, Phosphoramiditen, Alkylimidaten, Arylimidaten, Halogensäuren, substituierten Hydrazinen, substituierten Hydroxylaminen, Carbodiimiden, ausgewählt werden, wenn die Verbindung ein biologisches Molekül ist, oder
- aus Amino-, Ureido-, Hydroxyl-, Sulfhydryl-, Carboxyl-, Carbonyl- und Kronenether-Gruppen ausgewählt werden, wenn die Verbindung eine organische Verbindung ist,
- Gruppen, die in der Lage sind, mit einer anorganischen Verbindung zu reagieren, wobei sie eine starke oder schwache Bindung mit der Verbindung eingehen, und die ausgewählt werden aus Carboxylatgruppen, wenn die anorganische Verbindung ein Titanoxid, Zeolith oder Aluminiumoxid ist, Thiol oder Thioether, wenn die anorganische Verbindung ein Metall ist, oder einem Siloxan, wenn die anorganische Verbindung Siliziumdioxid oder eine oxidierte Siliziumfläche ist,
• die Substituenten S¹ und S² unabhängig voneinander eine Gruppe, die aus der für die Substituenten R1 bis R7 definierten Gruppe ausgewählt wird, oder eine der Formel -C≡C-L'-A entsprechende Gruppe darstellen, wobei:
- L' eine Einfachbindung oder eine Gruppe ist, die aus der für L definierten Gruppe ausgewählt wird, und
- A:
- eine chromophore Gruppe, die aus:
- Arylgruppen mit einem gegebenenfalls Substituenten tragenden aromatischen Ring,
- Arylgruppen mit mindestens zwei kondensierten Ringen, die gegebenenfalls mindestens einen Substituenten tragen,
- Gruppen, die die Eigenschaften eines Farbstoffs haben, ausgewählt wird,
- eine funktionelle Gruppe, die in der Lage ist, an ein biologisches Molekül zu binden, die aus der Gruppe bestehend aus Succinimidylester, Sulfosuccinimidylester, Isothiocyanat, Isocyanat, Iodacetamid, Maleimid, Halosulfonyl, Phosphoramiditen, Alkylimidaten, Arylimidaten, Halogensäuren, substituierten Hydrazinen, substituierten Hydroxylaminen und Carbodiimiden ausgewählt wird,
- eine funktionelle Gruppe, die in der Lage ist, an eine anorganische Verbindung zu binden, die aus einer Carboxylat-, Thiol-, Thioether- und Siloxanfunktion ausgewählt wird,
- eine funktionelle Gruppe, die in der Lage ist, an eine Polymerverbindung zu binden, wobei die funktionelle Gruppe aus H, Trialkylsilylen und einer vernetzbaren Funktion ausgewählt wird, oder
- eine funktionelle Gruppe, die in der Lage ist, an eine organische Verbindung oder ein organisches Salz zu binden, wobei die funktionelle Gruppe aus Amino-, Ureido-, Hydroxyl-, Sulfhydryl-, Carboxyl-, Carbonyl- oder Kronenethergruppen ausgewählt wird,
ist,
**dadurch gekennzeichnet, dass** mindestens einer der Substituenten S¹ und S² eine -C≡C-L'-A-Gruppe ist, wobei A eine chromophore Gruppe ist.

2. Verbindung gemäß Anspruch 1, **dadurch gekennzeichnet, dass** die Bindungsgruppe L aus mindestens einem Segment, das aus einer Einfachbindung, einem Alkylsegment, das 1 bis 10 Kohlenstoffatome hat, einem Phenylsegment, einem Alkinylsegment, das 2 bis 4 Kohlenstoffatome hat, einem Alkenylsegment, das 2 bis 4 Kohlenstoffatome hat, und einem Polyethersegment, das 1 bis 12 Sauerstoffatome hat, ausgewählt wird.

3. Verbindung gemäß Anspruch 1, **dadurch gekennzeichnet, dass** jeder der Substituenten S¹ und S² eine -C≡C-L'-A-Gruppe ist, wobei A eine chromophore Gruppe ist.

4. Verbindung gemäß einem der Ansprüche 1 oder 3, **dadurch gekennzeichnet, dass** L' eine Einfachbindung oder ein Alkylsegment, das 1 bis 10 Kohlenstoffatome hat, oder ein Polyethersegment, das 1 bis 12 Kohlenstoffatome hat, ist, und A eine chromophore Gruppe darstellt.

5. Verbindung gemäß Anspruch 1, **dadurch gekennzeichnet, dass** die Arylgruppe, die einen gegebenenfalls Substituenten tragenden aromatischen Ring hat, aus p-Toluyl, Styrenyl, Pyridinyl, Oligopyridinylen, Thienyl und Pyrrolyl ausgewählt wird.

6. Verbindung gemäß Anspruch 1, **dadurch gekennzeichnet, dass** die Arylgruppe, die mindestens zwei kondensierte Ringe umfasst, aus Naphthyl, Pyrenyl, Anthracenyl, Phenanthrenyl, Chinolyl, Phenanthronyl, Perylenyl, Fluorenyl, Carbazolyl und Acridinyl ausgewählt wird, wobei die Gruppen gegebenenfalls mindestens einen Substituenten tragen.

7. Verbindung gemäß Anspruch 1, **dadurch gekennzeichnet, dass** die Gruppe, die Eigenschaften eines Farbstoffes hat, aus den Gruppen Coumarinyl, Hydroxycoumarinyl, Alkoxycoumarinyl, Trisulfonatopyrenyl, Cyanin, Styrylpyridinium, Naphthalimidinyl und Phenylphenanthridium ausgewählt wird.

8. Verbindung gemäß Anspruch 1, **dadurch gekennzeichnet, dass** mindestens einer der Substituenten S¹ und S² eine -C≡C-L'-A-Gruppe ist oder mindestens einer der Substituenten R¹ bis R⁷ eine -L-G-Gruppe ist, in denen A oder G eine Gruppe ist, die es ermöglicht, die Verbindung an eine andere Verbindung zu binden.

9. Verbindung gemäß Anspruch 8, **dadurch gekennzeichnet, dass** L' oder L eine Einfachbindung oder ein Alkyl, das 1 bis 10 Kohlenstoffatome hat, oder ein Polyethersegment, das 1 bis 12 Kohlenstoffatome hat, ist.

10. Verbindung gemäß Anspruch 8, die an ein Polymer binden kann, **dadurch gekennzeichnet, dass** die Gruppe A oder die Gruppe G aus H, Trialkylsilyl-Gruppen oder einer vernetzbaren Funktion ausgewählt wird.

11. Verbindung gemäß Anspruch 1, **dadurch gekennzeichnet, dass** die vernetzbare Funktion aus den Methacrylat-, Vinyl-, Styryl-, Anilino-, Pyrrolyl-, Thiophenyl-, Furyl-, Isocyanato- und Epoxid-Gruppen ausgewählt wird.

12. Verbindung gemäß Anspruch 8, die an ein biologisches Molekül binden kann, **dadurch gekennzeichnet, dass** die Gruppe A oder die Gruppe G aus der Gruppe ausgewählt wird, die aus Succinimidylester, Sulfosuccinimidylester, Isothiocyanat, Isocyanat, Iodacetamid, Maleimid, Halosulfonyl, Phosphoramiditen, Alkylimidaten, Arylimidaten, Halogensäuren, substituierten Hydrazinen, substituierten Hydroxylaminen und Carbodiimiden besteht.

13. Verbindung gemäß Anspruch 8, die an eine organische Verbindung binden kann, **dadurch gekennzeichnet, dass** die funktionelle Gruppe A oder G eine funktionelle Gruppe ist, die in der Lage ist, eine starke Bindung (kovalente oder ionische Bindung) oder eine schwache Bindung (Wasserstoffbrückenbindung) mit einer nachzuweisenden Verbindung zu bilden.

14. Verbindung gemäß Anspruch 13, **dadurch gekennzeichnet, dass** die funktionelle Gruppe A oder G aus Amino-, Ureido-, Hydroxyl-, Sulfhydryl-, Carboxyl-, Carbonyl- oder Kronenether-Gruppen ausgewählt wird.

15. Verbindung gemäß Anspruch 8, die an eine anorganische Verbindung binden kann, **dadurch gekennzeichnet, dass** die Gruppe A oder die Gruppe G aus funktionellen Gruppen ausgewählt wird, die in der Lage sind, feste Bindungen mit anorganischen Stoffen einzugehen.

16. Verbindung gemäß Anspruch 15, die an Titanoxide, Zeolithe oder Aluminiumoxide binden kann, **dadurch gekennzeichnet, dass** die Gruppe A oder G eine Carboxylatfunktion ist.

17. Verbindung gemäß Anspruch 15, die an ein Metall binden kann, **dadurch gekennzeichnet, dass** A oder G eine Thiolgruppe oder eine Thioethergruppe ist.

18. Verbindung gemäß Anspruch 19, die an Siliziumdioxid und an die oxidierte Oberfläche von Silizium binden kann, **dadurch gekennzeichnet, dass** die Gruppe A oder G eine Siloxangruppe ist.

19. Verbindung gemäß Anspruch 1, **dadurch gekennzeichnet, dass** einer der Substituenten S¹ und S² eine -C≡C-L'-A-Gruppe ist, und der andere Substituent aus den gegebenenfalls einen Substituenten tragenden mononukleären Arylgruppen und den mindestens zwei kondensierte Kerne umfassenden Arylgruppen ausgewählt wird.

20. Verbindung gemäß Anspruch 1, **dadurch gekennzeichnet, dass** sie symmetrisch ist und der Formel (II) 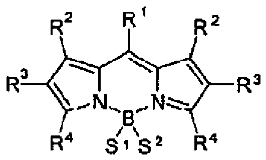 entspricht.

21. Verbindung gemäß Anspruch 1, **dadurch gekennzeichnet, dass** die Substituenten R³ und R⁴ gemeinsam mit dem Fünfring, der sie trägt, einen Ring ausbilden, und die Substituenten R⁵ und R⁷ gemeinsam mit dem Fünfring, der sie trägt, einen Ring ausbilden.

22. Verbindung gemäß Anspruch 21, **dadurch gekennzeichnet, dass** sie der Formel (III) 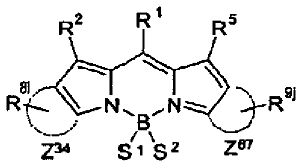 entspricht,
wobei die Substituenten R⁸ⁱ und R^{9j} unabhängig voneinander aus der für die Substituenten R¹ bis R⁷ definierten Gruppe ausgewählt werden.

23. Verwendung einer Verbindung gemäß einem der Ansprüche 1 bis 22 als fluoreszierender Marker.

24. Verwendung einer Verbindung gemäß einem der Ansprüche 1 bis 22 als elektrolumineszierender Stoff.

## Claims

1. Compounds corresponding to the general formula (I) 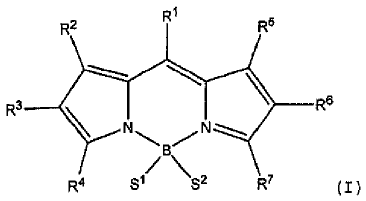 wherein:
• each of the substituents R¹, R², R³, R⁴, R⁵, R⁶ and R⁷ is selected independently of the other substituents from the group consisting of H, -L-H radicals, -G radicals and -L-G radicals,
or the two substituents R³ and R⁴ together form a divalent radical Z³⁴ and/or the two substituents R⁶ and R⁷ together form a divalent radical Z⁶⁷, said divalent radicals being such that they form, with the carbon atoms to which they are bound, a structure selected from the group consisting of one ring or two condensed rings, each ring having 5 or 6 atoms and comprising carbon atoms and at most two heteroatoms selected from N, O and S;
• L is a binding group consisting of a single bond, or consisting of one or more segments selected from the alkylene groups and the linear or branched alkenylene groups optionally comprising in their chain one or more oxygen atoms forming ether radicals, alkynylenes and arylenes comprising a single ring or a plurality of condensed or non-condensed rings;
• G is a functional group chosen among:
- polar groups chosen among amide, sulphonate, sulphate, phosphate, quaternary ammonium, hydroxyl, phosphonate and polyoxyethylene groups;
- electron donor groups or electroattractive groups chosen from cyano, nitro, fluoroalkyl, perfluoroalkyl, amide, nitrophenyl, substituted triazino, sulphonamide, alkenyl and alkynyl groups, and the binding group L being selected from alkenylene or alkynylene segments having from 2 to 4 carbon atoms;
- reactive functional groups which allow said compound to be grafted onto a biological molecule, and groups capable of interacting with an organic compound and forming a strong bond or a weak bond with said compound and:
- chosen among H, trialkylsilyls, or a crosslinking group when said compound is polymeric compound;
- chosen among succinimidyl ester, sulphosuccinimidyl ester, isothiocyanate, isocyanate, iodoacetamide, maleimide, halosulphonyls, phosphoramidites, alkylimidates, arylimidates, halogenoacids, substituted hydrazines, substituted hydroxylamines and carbodiimides when said compound is a biological molecule;
- chosen among amino, ureido, hydroxyl, sulphhydryl, carboxyl, carbonyl or crown ether groups when said compound is an organic compound;
- functional groups capable of reacting with an inorganic compound, forming a strong bond or weak bond with said compound and chosen among carboxylate groups when the inorganic compound is a titanium oxide, a zeolite or an alumina; thiol or thioether groups when this inorganic compound is a metal or a siloxane group when the inorganic compound is a silica or an oxidised surface of silicon.
• the substituents S¹ and S² each independently represent a radical selected from the group defined for the substituents R¹ to R⁷; or a radical corresponding to the formula -C≡C-L'-A, in which L' is a single bond or a radical selected from the group defined for L, and A is:
- a chromophoric group chosen along:
- aryl radicals having an aromatic ring optionally carrying substituents,
- aryl radicals having at least two condensed rings, said radicals optionally carrying at least one substituent; and
- radicals with dye properties;
- a functional group being able to be grafted onto a biological molecule chosen among succinimidyl ester, sulphosuccinimidyl ester, isothiocyanate, isocyanate, iodoacetamide, maleimide, halosulphonyls, phosphoramidites, alkylimidates, arylimidates, halogenoacids, substituted hydrazines, substituted hydroxylamines and carbodiimides,
- a functional group capable to be grafted onto an inorganic compound chosen among a carboxylate function, a thiol, a thioether and siloxan,
- a functional group capable to be grafted onto a polymeric compound, said functional group being chosen among H, trialkylsilyls, or a crosslinking group, or
- a functional group capable to be grafted onto an organic compound or an organic salt, said functional group being chosen among amino, ureido, hydroxyl, sulphhydryl, carboxyl, carbonyl or crown ether groups;
**characterized in that** at least one of the substituents S¹ and S² is -C≡C-L'-A group in which A is a chromophoric group.

2. Compound according to claim 1, wherein the binding group L consists of at least one segment selected from a single bond, an alkylene segment having from 1 to 10 carbon atoms, a phenylene segment, and of an alkynylene segment having from 2 to 4 carbon atoms, an alkenylene segment having from 2 to 4 carbon atoms and a polyether segment having from 1 to 12 oxygen atoms.

3. Compound according to claim 1, wherein each of the substituents S¹ and S² is a - C≡C-L'-A group, in which A is a chromophoric group.

4. Compound according to claim 1 or 3, wherein L' is a single bond or an alkylene segment having from 1 to 10 carbon atoms or a polyether segment having from 1 to 12 carbon atoms and A represents a chromophoric radical.

5. Compound according to claim 1, wherein the aryl radical having an aromatic ring optionally carrying substituents is selected from p-toluyl, styrenyl, pyridinyl, oligopyridinyls, thienyl and pyrrolyl.

6. Compound according to claim 1, wherein the aryl radical having at least two condensed rings is selected from naphthyl, pyrenyl, anthracenyl, phenanthrenyl, quinolyl, phenanthronyl, perylenyl, fluorenyl, carbazolyl and acridinyl, said radicals optionally carrying at least one substituent.

7. Compound according to claim 1, wherein the radical with dye properties is selected from coumarinyl, hydroxycoumarinyl, alkoxycoumarinyl, trisulphonatopyrenyl, cyanine, styrylpyridinium, naphthalimidinyl and phenylphenanthridium radicals.

8. Compound according to claim 1, wherein at least one of the substituents S¹ and S² is a -C≡C-L'-A group or at least one of the substituents R¹ to R⁷ is an -L-G group, in which A or G is a radical which allows said compound to bind with another compound.

9. Compound according to claim 8, wherein L' or L is a single bond or an alkylene having from 1 to 10 carbon atoms or a polyether segment having from 1 to 12 carbon atoms.

10. Compound according to claim 8 which can be bound to a polymer, wherein radical A or radical G is selected from H, trialkylsilyl groups or a crosslinking group.

11. Compound according to claim 1, wherein the crosslinking group is selected from methacrylate, vinyl, styryl, anilino, pyrrolyl, thiophenyl, furyl, isocyanato, and epoxide groups.

12. Compound according to claim 8, which can be bound to a biological molecule, wherein radical A or radical G is selected from the group consisting of succinimidyl ester,
sulphosuccinimidyl ester, isothiocyanate, isocyanate, iodoacetamide, maleimide, halosulphonyls, phosphoramidites, alkylimidates, arylimidates, halogenoacids, substituted hydrazines, substituted hydroxylamines, and carbodiimides.

13. Compound according to claim 8, which can be bound to an organic compound, wherein the functional group A or G is a functional group capable of forming strong bond (covalent or ionic bond) or a weak bond (hydrogen bond) with a compound to be detected.

14. Compound according to claim 13, wherein functional group A or G is selected from the amino, ureido, hydroxyl, sulphhydryl, carboxyl, carbonyl or crown ether radicals.

15. Compound according to claim 8, which can be bound to an inorganic compound, wherein radical A or radical G is selected from the functional groups capable of forming strong bonds with inorganic materials.

16. Compound according to claim 15, which can be bound to titanium oxides, zeolites or alumina, wherein group A or G is a carboxylate group.

17. Compound according to claim 15, which can be bound to a metal, wherein A or G is a thiol group or a thioether group.

18. Compound according to claim 19, which can be bound to silica and to the oxidised surface of silicon, wherein group A or G is a siloxane group.

19. Compound according to claim 1, wherein one of the substituents S¹ and S² is a - C=C-L'-A radical, and the other substituent is selected from, mononuclear aryl radicals optionally carrying a substituent and aryl radicals comprising at least two condensed rings.

20. Compound according to claim 1, wherein it is symmetrical and corresponds to formula (II)

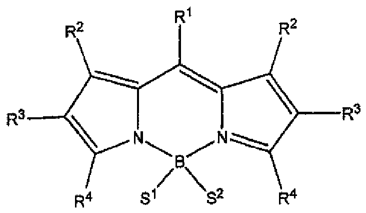

21. Compound according to claim 1, wherein the substituents R³ and R⁴ together form a cycle with the pentacycle carrying them, and the substituents R⁵ and R⁷ together form a cycle with the pentacycle carrying them.

22. Compound according to claim 21, wherein said compound corresponds to formula (III) 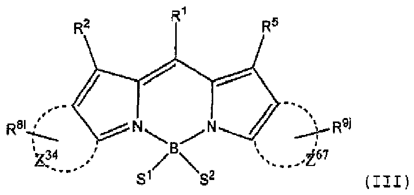 in which the substituents R⁸ⁱ and R^{9j} are selected independently of one another from the group defined for the substituents R¹ to R⁷.

23. Use of a compound according to any one of claims 1 to 22 as a fluorescent label.

24. Use of a compound according to any one of claims 1 to 22 as an electroluminescent material.
